# EUROPEAN PATENT SPECIFICATION

(11) **EP 3 036 298 B1**
(45) Date of publication and mention of the grant of the patent: **05.09.2018**
(21) Application number: 14744061.4
(22) Date of filing: 23.07.2014
(51) Int. Cl.: C09J 121/00, C08K 3/36, C07F 7/08, C09C 1/30, C09J 11/06, C08K 9/06

(54) **IMPROVED BONDING OR VULCANISATION COMPOSITIONS**
VERBESSERTE BINDUNGS- ODER VULKANISIERUNGSZUSAMMENSETZUNGEN
COMPOSITIONS DE LIAISON OU VULCANISATION AMÉLIORÉES

(30) Priority: 20.08.2013 GB 201314854
(43) Date of publication of application: 29.06.2016
(73) Proprietor: Henkel IP & Holding GmbH, 40589 Düsseldorf (DE)
(72) Inventor: FLEMING, Eimear, 6W Dublin (IE); NOLAN, Darren, Tallaght Dublin 24 (IE); KNEAFSEY, Brendan, Lucan Dublin (IE); LEDWITH, Deirdre, Phibsboro Dublin 7 (IE)
(86) International application number: PCT/EP2014/065839
(87) International publication number: WO 2015/024727

(56) References cited:
- WO-A1-2011/032998
- WO-A1-2014/040645
- US-A1- 2012 003 501
- US-A1- 2012 006 484
- US-A1- 2012 164 904
- US-A1- 2012 193 029
- US-B1- 8 153 268

## Description

### Field of the Invention

The present invention provides for improved compositions. In particular, the present invention provides for improved compositions useful in vulcanisation processes or in bonding applications such as those involving binding polymers to substrates such as metals, glass or other hydroxylated substrates, where superior bond durability and resistance is required. Of particular interest are components that can improve the bond formed by a bonding composition or the vulcanised material formed from a vulcanisation process.

### Brief Description of Related Technology

Vulcanisation is a well established process for treating elastomers, such as rubber with curatives or accelerators such as sulfur, to form a more durable product. Some material used in vulcanisation, such as certain nitroso compounds, may be hazardous and alternatives are desirable.

Reinforced composite materials play a critical role in the manufacture of high-performance products that need to be lightweight, yet strong enough to take harsh loading and operating conditions. Popular reinforcing materials included wood, glass, metals, quartz and carbon fibres. Composites reinforced with these types of substrate may find utility in the manufacture of a number of structural materials such as aerospace components and racing car bodies.

Polymer to metal substrate and in particular, rubber to metal bonding, has been practised for many years. There are many applications for formulations, which achieve polymer or rubber to metal bonding. Rubber to metal bonding is widely used to bond different metals to a natural or synthetic rubber so as to combine the structural strength of the metal with the elastomeric properties of the rubber.

Accordingly, metal and polymers such as rubber are often bonded to each other for impact absorption applications, such as in bearings, wheels, shock absorbers, moving arms, *etc.* Such components can be utilised on a very small scale, for example in PC components or on a very large scale for example in constructions such as bridges and buildings. Noise reduction may also be achieved by utilising metal to rubber bonding. It is accepted that tremendous forces can be experienced by any component that comprises metal and rubber bonded together. Thus, it is desirable to provide metal to rubber bonding, which can withstand significant forces, such as compressive or extensive pressures including shocks without having the metal or the rubber separate from each other. There are many other rubber to metal bonding applications, including tyre production where internal wire reinforcements for the tyre are bonded to the rubber of the tyre. Prior art compositions are discussed below.

Glass fibre reinforced composite materials consist of high strength glass fibres embedded in a matrix. For example, Glass Fibre Reinforced Concrete comprises glass fibres embedded in cement-based matrix and may find utility in buildings and other structural edifices. Similarly, Glass Reinforced Plastic comprises glass fibres embedded in a plastic material. Glass Reinforced Plastics are immensely versatile materials which combine to provide lightweight materials with high strength performance. Glass reinforced plastics find utility in a number of different areas from structural engineering to telecommunications.

Elastomer to glass bonding provides an attractive means by which the structural strength of glass can be combined with the elastomeric properties of the elastomer/rubber. Reinforcing fibres such as glass fibres have been used as a reinforcing material for rubber articles such as in rubber belts, tyres and hoses. In particular, glass fibres have been employed to reinforce automotive timing belts, where there is a need for synchronous transfer of power from crankshaft to overhead camshaft without loss of inertia.

Traditionally, such glass cord composites are manufactured by coating individual filaments of glass yarn with specialised coatings, such as resorcinol formaldehyde latex ("RFL") formulations. Conventional rubber to metal bonding products are then employed to bond the RFL latex to the rubber via a vulcanisation step.

Traditional rubber-to-metal bonding technology incorporates a two-step system, where in a first step a primer is applied and thereafter in a second step an improved curable, for example, adhesive composition is applied. The primer ordinarily consists of solutions or suspensions of chlorinated rubber and phenolic resins containing reactive groups, and also pigments such as titanium dioxide, zinc oxide, carbon black, *etc.* The primer is generally applied as a thin layer onto a treated (cleaned) surface of a metallic component such as treated steel component for example a component that has been grit blasted or chemically treated.

The improved curable composition ordinarily consists of a large range of rubber materials and cross-linkers. These include, but are not restricted to, chlorinated and bromochlorinated rubbers, aromatic nitrosobenzene compounds and bismaleimide as cross-linkers, xylene, perchloroethylene and ethylbenzene as solvents, and also some lead or zinc salts. The improved curable composition layer is generally the link between the primed metal and the rubber. Other cross-linkers that have been employed in rubber-to-metal bonding technology are aromatic nitroso compounds, such as p-dinitrosobenzene.

Many formulations for rubber to metal bonding exist. For example silanes have been used as corrosion inhibitors and as rubber-to-metal bonding adhesion promoters. U.S. Patent Application Publication No. 2009/0181248 discloses substantially hydrolysed silane solutions, for example bis(trimethoxypropyl)amine and bis(triethoxypropyl)tetrasulfide, for use in a rubber to metal bonding composition. The amino silane and sulphide silane are formulated in a ratio of 1:3 respectively, in an ethanol/water solution.

International Patent Publication No. WO2004/078867 to Lord Corporation describes a single coat solvent-based improved curable composition designed to bond thermoplastic elastomers containing an alkoxy silane/urethane adduct and a chlorinated polymer. Methods of synthesis and formulation are described within this patent document. U.S. Patent No. 4,031,120 to Lord Corporation describes a composition comprising an isocyanate functional organosilane, in combination with a polyisocyanate and an aromatic nitroso compound. The resulting system is described as a one-coat improved curable composition for bonding a variety of elastomeric materials to metals and other substrates.

Canadian Patent No. 1,087,774 describes a composition for use in the production of composite rubber materials. The composition discloses a one-part composition comprising a vulcanisable polymer, a discrete aromatic nitroso compound and discrete organic phosphonic acids (and partial esters thereof). Problematically, the toxic nitrosobenzene component is freely formulated within the composition.

UK Patent Publication No. GB 2,083,011 describes silica/sulphur complexes that are prepared by grinding and intimately mixing sulphur and silica. German Patent Publication No. DE 2553256 describes processes for improving the adhesion of rubbers to other substrates using sulfur materials. The English language Abstract for Japanese Patent Publication No. JP59161451 describes a sulphur complex, which is said to ameliorate the problems of scorching or blooming during a vulcanisation process comprises sulfur adsorbed onto graphite, carbon black, carbon white, or zeolites.

Generally, it is desirable that bonding is achieved during a vulcanisation step like compression moulding, transfer moulding, injection moulding and autoclave heating, for example with steam or hot air. For example, semi-solid rubber can be injected into a mould. The semi-solid rubber is then cross-linked into a fully cured rubber and the bond with the substrate is formed at the same time.

Certain characteristics of the curing system are desirable. These include, ease of processing, stability (for example avoiding sedimentation), ease of application, fast drying (to allow handling without fouling), good wetting properties, and good curing strengths. Curing should be achieved independently of the type of elastomer (rubber) employed and also independently of the type of substrate. It will be appreciated that some rubbers are blended materials and accordingly it is desirable that good curing is achieved with such blended materials. Suitably consistent curing is achieved under various process parameters.

Peroxides have been used as curatives in rubber manufacture. However, peroxide curing tends to result in poorer tensile and tear properties, incompatibility with anti-oxidants used in the process, and are expensive to use. Metal oxides are used to cure neoprenes. However they are expensive to use and the associated metal waste is not desirable. Phenol formaldehyde resins have been used to cure butyl rubber. However alcohol is formed as a by-product. This is undesirable. Phenols formaldehyde resins also have limited shelf life.

Notwithstanding the state of the art it would be desirable to provide improved compositions to bond polymeric substrates to a variety of substrates (such as metals, glass, quartz, etc.) that remedy some or all of the known deficiencies and/or provide alternatives to the existing technologies so that consumers have more possibilities from which to choose. It would also be useful to provide improved compositions for use in vulcanisation processes. It would be particularly desirable to provide a range of improved compositions that provide bonding that is more resistance to bond stresses than existing compositions. In particular, compositions that improve bond resistance over time in certain applications are desirably, for example, applications involving high temperature and/or pressures, and in particular applications where moisture may be present. It would therefore be desirable to provide a variety of improved curable compositions, which are suitable for use in a wide range of applications, and which provide increased bond durability, particularly for applications requiring harsh operating conditions.

### Summary of the Invention

The present invention provides a novel component for use in vulcanisation and/or bonding compositions. The present invention relates to a particulate material comprising:
(i) a solid carrier material, and
(ii) a nitroso compound and/or an aromatic oxime as a nitroso precursor compound
wherein said nitroso compound and/or said nitroso precursor compound is covalently bonded to the solid carrier material, and wherein the solid carrier material is a silicaceous material and/or the particulate carrier material is particulate silica.

The term nitroso precursor refers to any compound that is capable of being transformed directly into a compound comprising at least one nitroso group. Suitably the nitroso precursor is an aromatic oxime.

The solid carrier material may be a solid carrier comprising one or more hydroxyl groups through which the nitroso compound and/or nitroso precursor compound is covalently bonded to the carrier material.

The present invention addresses the need for alternative materials for use in rubber manufacturer or rubber bonding applications. The invention also addresses the need to improve curing times in rubber vulcanisation applications. The materials of the invention replace other components, which are considered undesirable. For example they may be used to replace noxious and/or reactive components such as accelerators of vulcanisation agents. Such components are increasingly coming under environmental scrutiny and stricter controls.

The particulate carrier material is selected from the group consisting of silicaceous materieals including silica.

Silicaceous materials are defined as those having a silica content in an amount of from 10wt% to 90wt%, preferably in an amount of greater than 30wt%, based on total weight of silicaceous material.

The particulate carrier material is particulate silica. This is an effective yet easy to use/handle component.

The particulate carrier may be in the form of nanoparticles, for example nanoparticles of silicaceous materials, such as silica nanoparticles. Small particles are desirable as it facilitates the delivery of the nitroso or nitroso precursor compound to a desired target area, for example proximate a bond-line. The component of the invention does not deleteriously affect the bond/elastomer formed.

As used in the present invention the term nanoparticles refers to a particulate material having an average particle size from 10 nm to 500 µm. As used herein, the term "average particle size" refers to median size distribution value (D₅₀). The D₅₀ value of the cumulative volume distribution curve is the value at which 50% by volume of the particles have a diameter less than said value. The volume average particle size or D₅₀ value is measured in the present invention through dynamic light scattering (DLS).

The average particle size of the particulate carrier material may be from 10 nm to 500 µm for example from 100 nm to 200 µm, such as from 100 nm to 1,000 nm, including from 200 nm to 1,000 nm.

The nitroso or nitroso precursor compound may be bonded covalently to the solid carrier material through the oxygen atom of one or more groups containing an Si-O moiety. This provides an effective way of ensuring the nitroso compound and/or nitroso precursor compound remains covalently attached.

The nitroso or nitroso precursor compound may be bonded to the solid carrier material through one or more of the oxygen atoms of one or more groups, for example the oxygen atoms of a moiety having at least one -Si(OR)₂O- group wherein each R is independently selected from the group of C₁-C₂₄ alkyl, C₃-C₂₄ acyl, C₃-C₂₄ cycloalkyl, C₅-C₁₂ aryl, C₄-C₁₂ heteroaryl; and is optionally substituted with at least one of -OH, amine, nitro, nitroso, -CN, halogen, C₁-C₁₀ alkyl, C₃-C₁₀ acyl, C₁-C₁₀ alkoxy, or C₅-C₁₀ aryl. This provides multiple bonds from a single group to the carrier and thus is an effective way to affix the nitroso or nitroso precursor compound.

The nitroso compound and/or nitroso precursor compound may be attached to the particulate carrier material by hydrolysing at least one C₁-C₁₀ alkoxy silane group, suitably a C₁-C₃ alkoxy silane group, thus providing one easy method for attachment.

The nitroso compound and/or nitroso precursor compound may be attached to the solid carrier material by a condensation reaction.

The particulate carrier material may be formed in-situ, for example the solid carrier material may be formed in the same reaction vessel and/or at the same time as the nitroso or nitroso precursor compound is attached thereto.

The particulate carrier material may be formed in-situ, for example the solid carrier material may be formed in the same reaction vessel with substantially simultaneous attachment of the nitroso or nitroso precursor compound thereto.

The solid carrier material may comprise silica nanoparticles which may be formed in-situ.

The solid carrier material may be formed in situ. The solid carrier material is selected from the group consisting of silicaceous materials, for example silica. Particulate carrier silica nanoparticles can be formed from tetra-alkylorthosilicates such as tetra-ethylorthosilicate (TEOS).

Suitably, the nitroso compound may be a nitrososilane molecule.

The carrier particle, for example a silica particle of the invention, is a safe carrier for a molecule comprising a nitroso (or nitroso precursor) functionality. The novel component of the invention can be utilised in a process for curing rubber, or in a process for bonding the rubber to a substrate. Accordingly, the materials of the invention may be used in the manufacture of all rubber containing substrates but also as an additive in rubber to substrate bonding.

Sulfur is the most commonly used vulcanisation agent. It has a tendency to bloom. That characteristic is not demonstrated with the materials of the present invention. Accordingly, the particulate material, for example nitroso (or nitrosoprecursor) carrying silica particle, can be used in combination with sulfur or other accelerators or vulcanisation agents to optimise rate of cure.

Within the context of this specification, it is to be appreciated that the term aromatic nitroso moiety refers to an aromatic moiety having at least one nitroso group. Similarly, the term aromatic nitroso precursor moiety refers to any compound that is capable of being transformed into an aromatic nitroso moiety with at least one nitroso group. Suitable aromatic nitroso precursors include oximes. The term aromatic comprises both fused and non-fused aromatic rings. For example, a non-limiting selection of fused and non-fused aromatic nitroso moieties embraced by the present invention are detailed below:

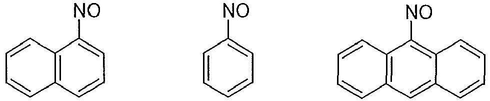

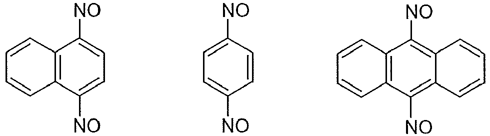

As will be appreciated by a person skilled in the art, the nitroso compounds or structures disclosed above may optionally be substituted one or more times, for example with at least one of C₁-C₂₀ alkyl, C₂-C₂₀ cycloalkyl, C₁-C₂₀ alkoxy, C₃-C₂₀ aralkyl, C₃-C₂₀ alkaryl, C₄-C₂₀ arylamine, C₄-C₂₀ arylnitroso, cyano, amino, hydroxy, halogen and combinations thereof. Such substitutions are possible provided there is no interference with effective bonding or curing of the compositions.

The at least one moiety selected from an aromatic nitroso or an aromatic nitroso precursor and combinations thereof may be selected from a nitrosobenzene or a nitrosobenzene precursor or combinations thereof.

Desirably, the nitrosobenzene compound may be a mononitrosobenzene compound, a dinitrosobenzene compound, or combinations thereof. The aromatic nitroso compound is selected from the group consisting of m-dinitrosobenzene, p-dinitrosobenzene, m-dinitrosonaphthalene, p-dinitrosonaphthalene, 2,5-dinitroso-p-cymeme, 2-methyl-1,4-dinitrosobenzene, 2-methyl-5-chloro-1,4-dinitrosobenzene, 2-fluoro-1,4-dinitrosobenzene, 2-methoxy-1-3-dinitrosobenzene, 5-chloro-1,3-dinitrosobenzene, 2-benzyl-1,4-dinitrosobenzene, 2-cyclohexyl-1,4-dinitrosobenzene and combinations thereof.

In some embodiments of the present invention the nitroso compound may be generated in situ from a nitroso precursor compound.

As will also be appreciated by a person skilled in the art, the nitroso compounds or nitroso precursor compounds may be substituted, for example with a linker group, in a manner such that attachment to the particulate carrier material is possible.

In some embodiments of the present invention, the nitroso compound may comprise a hydroxyl group, for example, a nitroso compound may be a nitroso phenol, tethered to the particulate carrier material.

Desirably compositions of the present invention may find utility in bonding a substrate to a natural or synthetic rubber. For example, the compositions may be used for applications where bonding metal to natural or synthetic rubber is required. In particular, the improved compositions of the present invention will provide for in-situ generation of a nitrosobenzene moiety or a dinitrosobenzene moiety. For example, to achieve good bonding it may be desirable for the compound to react in-situ to form a nitroso aromatic moiety comprising a hydroxy group. The nitroso aromatic moiety comprising a hydroxy group may be a para-nitrosophenol moiety. The phenolic moiety present may help to anchor the para-nitrosophenol moiety to a metal surface. *para-*Nitrosophenol may be generated *in-situ* from the oxidation of quinone mono-oxime as shown below for information purposes:

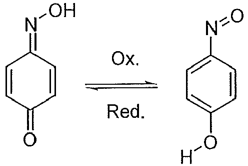

As will be appreciated by a person skilled in the art, references to nitrosobenzene and nitrosobenzene precursor moieties include nitrosobenzene and nitrosobenzene precursor moieties that may optionally be substituted one or more times with at least one of C₁-C₂₀ alkyl, C₃-C₂₀ cycloalkyl, C₁-C₂₀ alkoxy, C₅-C₂₀ aralkyl, C₅-C₂₀ alkaryl, C₄-C₂₀ arylamine, C₄-C₂₀ arylnitroso, cyano, amino, hydroxy, halogen and combinations thereof. Such substitutions are possible provided there is no interference with effective bonding or curing of the compositions. For example, provided there is no interference with the generation of a nitrosobenzene moiety *in-situ.* It will be appreciated that the nitrosobenzene precursor may form a nitrosobenzene structure *in-situ.* The nitrosobenzene precursor may be an aromatic oxime, for example at least one of a quinone dioxime or a quinone oxime or combinations thereof. Desirably, the aromatic nitroso compound precursor is selected from the group consisting of p-benzoquinone dioxime (QDO), naphthoquinone dioxime, toluquinone dioxime, diphenoquinone dioxime, diquinoyl dioxime, dibenzoyl dioxime and combinations thereof. The above list serves as a generalised example only and other aryl oximes and dioximes are possible and embraced by the present invention. Desirably, the nitrosobenzene precursor comprises p-benzoquinone oxime or p-benzoquinone dioxime (QDO). QDO is generally used as a vulcanizing agent for EPDM (ethylene-propylene diene monomer) to improve heat resistance. It is also used as a rubber to metal adhesion promoter and as a curing agent. It has been found that such structures assist in the formation of desirable bonds.

A general scheme for the oxidation of quinone dioxime to the dinitrosobenzene species using an oxidant, such as benzoyl peroxide (BPO), is shown below, for information purposes:

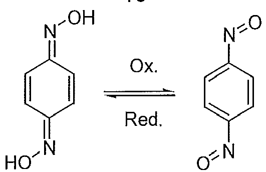

The at least one aromatic nitroso compound precursor may be present in an amount of 1 to 20% w/w of the total composition. Suitably, the at least one aromatic nitroso compound precursor may be present in an amount of 1 to 10% w/w, for example 2 to 7% w/w. The at least one aromatic nitroso compound precursor may be present in 3% w/w of the total composition.

For example, the aromatic nitroso precursor moiety may be the mono- or dioxime of a compound selected from:

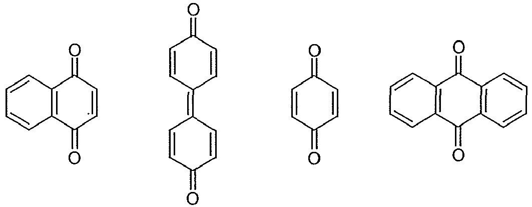

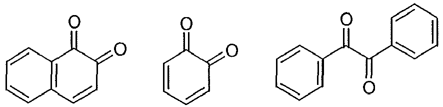

As will be appreciated by a person skilled in the art, the diketone structures disclosed above may optionally be substituted one or more times, for example with at least one of C₁-C₂₀ alkyl, C₃-C₂₀ cycloalkyl, C₁-C₂₀ alkoxy, C₅-C₂₀ aralkyl, C₅-C₂₀ alkaryl, C₄-C₂₀ arylamine, C₄-C₂₀ arylnitroso, cyano, amino, hydroxy, halogen and combinations thereof. Such substitutions are possible provided there is no interference with effective bonding or curing of the compositions, for example, with the generation of an aromatic nitroso compound *in-situ.*

As will be appreciated by a person skilled in the art, references to nitrosobenzene and nitrosobenzene precursor moieties include nitrosobenzene and nitrosobenzene precursor moieties that may optionally be substituted one or more times with at least one of C₁-C₂₀ alkyl, C₃-C₂₀ cycloalkyl, C₁-C₂₀ alkoxy, C₅-C₂₀ aralkyl, C₅-C₂₀ alkaryl, C₄-C₂₀ arylamine, C₄-C₂₀ arylnitroso, cyano, amino, hydroxy, halogen and combinations thereof. Such substitutions are possible provided there is no interference with effective bonding or curing of the compositions. For example, provided there is no interference with the generation of a nitrosobenzene moiety *in-situ.*

Suitably, the above mentioned nitrososilane compounds may have an alkoxy silane moiety of the general structure: 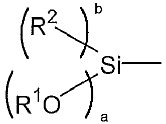 wherein a is from 1 to 3, b is from 0 to 2, with the proviso that a+b = 3; each R¹ is independently selected from the group consisting of H, C₁-C₂₄ alkyl, and C₃-C₂₄ acyl, preferably from C₁-C₄ alkyl and wherein when a ≥ 1 at least one R¹ is not hydrogen; and each R² is independently selected from the group consisting of C₁-C₂₄ alkyl and/or C₃-C₂₄ acyl, preferably from C₁-C₄ alkyl. In one embodiment, a is 3 and R¹ is C₁-C₂₄ alkyl. R¹ may be C₁-C₄ alkyl and a may be 3.

The compounds may be reaction products derived from an isocyanate or isothiocyanate and an active hydrogen compound, such as -NHₓ (where x = 1 or 2), - SH, or -OH. In this manner the so-described compounds should contain at least one linkage described by: 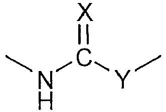 where X can be S or O, and Y includes -NHₓ (where x = 1 or 2), -S, or -O.

The general structure for the compounds is shown below: 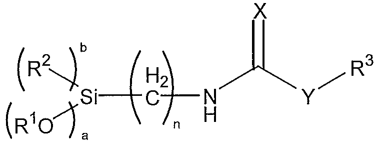 wherein n is from 1 to 20; a is from 1 to 3, b is from 0 to 2, with the proviso that a+b = 3; each R¹ is independently selected from the group consisting of H, C₁-C₂₄ alkyl, and C₃-C₂₄ acyl, preferably from C₁-C₄ alkyl and wherein when a ≥ 1 at least one R¹ is not hydrogen; each R² is independently selected from the group consisting of C₁-C₂₄ alkyl and C₃-C₂₄ acyl, preferably from C₁-C₄ alkyl; X is O or S; Y is O, S, or N(R³); and R³ is a moiety comprising nitrosobenzene, quinone oxime or quinone dioxime. R³ may be a moiety comprising nitrosobenzene, quinone dioxime or quinone oxime.

R¹ may be selected from C₁-C₂₄ alkyl, C₃-C₂₄ acyl. R¹ may be selected from C₁-C₂₄ alkyl, C₃-C₂₄ acyl and 'a' may be 3. X may be O. Y may be O or -NHₓ (where x = 1). Y may be O. X and Y may be O. R¹ may be selected from C₁-C₄ alkyl, X may be O and 'a' is 3. R¹ may be selected from C₁-C₄ alkyl, X may be O, Y may be O and 'a' may be 3. R¹ may be selected from C₁-C₄ alkyl, X may be O, Y may be -NHₓ (where x = 1) and 'a' may be 3. R¹ may be selected from C₁-C₄ alkyl, X may be O, Y may be O, 'a' may be 3 and R³ may be a moiety comprising nitrosobenzene.

Structures for R³, showing the linkage through 'Y', can include: 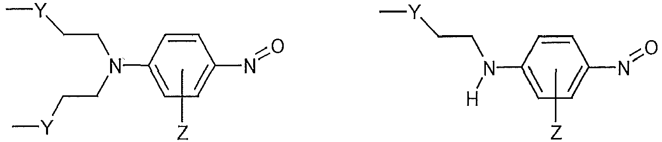 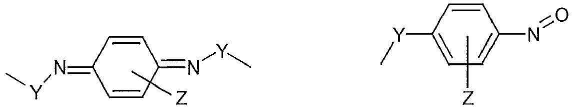 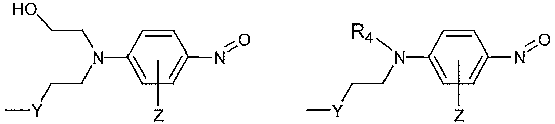 where R₄ can be C₁ to C₁₀; and
Z indicates that the rings of the above structures can optionally be mono-, di-, tri- or tetrasubstituted with the group consisting of C₁-C₂₀ alkyl, C₃-C₂₀ cycloalkyl, C₁-C₂₀ alkoxy, C₅-C₂₀ aralkyl, C₅-C₂₀ alkaryl, C₄-C₂₀ arylamine, C₄-C₂₀ arylnitroso, amino, hydroxy, halogen and combinations thereof, and further where the substituents can either be the same or different on each carbon atom of the ring. Such substitutions may be possible provided there is no interference with effective bonding or curing of the compositions. For example, provided there is no interference with the generation of a nitrosobenzene compound *in-situ.*

Suitably, the nitroso compound may have the general structure: 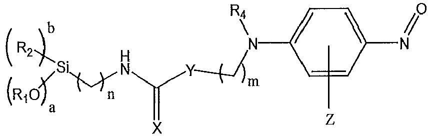
where 'a' can be 1-3 and 'b' can be 0-2; wherein a+b= 3 and at least one alkoxy group is present;
R¹ can be selected from H, C₁-C₂₄ alkyl, C₃-C₂₄ acyl, preferably from C₁-C₄ alkyl and where when a ≥ 1 at least one R¹ is not hydrogen; and
R² can be selected from C₁-C₂₄ alkyl and C₃-C₂₄ acyl, preferably from C₁-C₄ alkyl;
m and n can be the same or different and can be 1-10;
X can be O or S;
Y can be -O, -S, or -NH;
R₄ can be C₁ to C₁₀; and
Z indicates that the rings of the above structures can optionally be mono-, di-, tri- or tetrasubstituted with the group consisting of C₁-C₂₀ alkyl, C₃-C₂₀ cycloalkyl, C₁-C₂₀ alkoxy, C₅-C₂₀ aralkyl, C₅-C₂₀ alkaryl, C₄-C₂₀ arylamine, C₄-C₂₀ arylnitroso, amino, hydroxy, halogen and combinations thereof, and further wherein the substituents can either be the same or different on each carbon atom of the ring. Such substitutions may be possible provided there is no interference with effective bonding or curing of a bonding composition comprising the compound.
R¹ may be selected from C₁-C₂₄ alkyl or C₃-C₂₄ acyl. R¹ may be selected from C₁-C₂₄ alkyl, C₃-C₂₄ acyl and 'a' may be 3. X may be O. Y may be O or NH. Y may be O. X and Y may be O. n may be C₂-C₅ alkyl. m may be C₂-C₅ alkyl. R¹ may be selected from C₁-C₄ alkyl, X may be O and 'a' is 3. R¹ may be selected from C₁-C₄ alkyl, X may be O, Y may be O and 'a' may be 3. R¹ may be selected from C₁-C₄ alkyl, X may be O, Y may be NH and 'a' may be 3. R¹ may be selected from C₁-C₄ alkyl, X may be O, Y may be O, 'a' may be 3 and R₄ may be C₁ to C₁₀.

Desirably, the nitroso precursor of the present invention may have the general structure: 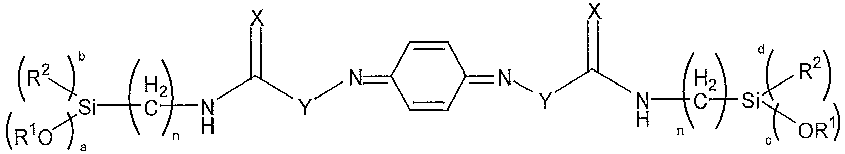
where n can be 1-10;
'a' can be 1-3 and 'b' can be 0-2; wherein a+b= 3 and at least one alkoxy group is present;
c can be the same as 'a' or 1 to 3; d can be the same as 'b' or 1 to 3;
R¹ can be selected from H, C₁-C₂₄ alkyl, C₃-C₂₄ acyl, preferably from C₁-C₄ alkyl and where when a ≥ 1 at least one R¹ is not hydrogen;
R² can be selected from C₁-C₂₄ alkyl and C₃-C₂₄ acyl, preferably from C₁-C₄ alkyl;
X can be O or S; and
Y can be -O, -S, or -NHₓ (where x = 1 or 2).

R¹ may be selected from C₁-C₂₄ alkyl, C₃-C₂₄ acyl. R¹ may be selected from C₁-C₂₄ alkyl, C₃-C₂₄ acyl and 'a' may be 3. X may be O. Y may be O or -NHₓ (where x = 1). Y may be O. X and Y may be O. R¹ may be selected from C₁-C₄ alkyl, X may be O and 'a' is 3. R¹ may be selected from C₁-C₄ alkyl, X may be O, Y may be O and 'a' may be 3. R¹ may be selected from C₁-C₄ alkyl, X may be O, Y may be -NHₓ (where x = 1) and 'a' may be 3. R¹ may be selected from C₁-C₄ alkyl, X may be O, Y may be O, n may be 3 and 'a' may be 3.

In a further embodiment, the nitroso compound or nitroso precursor compound to be bound to the carrier material of the present invention may be an oligomeric or co-oligomeric compound of the general structure: 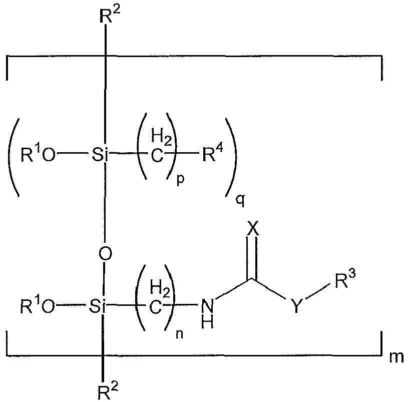
where m can be 1-100; n can be 1-10; p can be 1-10; q can be 0-50; and if q = 0, m ≥2; R¹ can be selected from H, C₁-C₂₄ alkyl, C₃-C₂₄ acyl, and preferably from C₁-C₄ alkyl;
R² can be selected from OR¹, C₁-C₂₄ alkyl and C₃-C₂₄ acyl, and where when R² = OR¹ at least one R¹ is not hydrogen;
R₄ can be selected from acrylate, aldehyde, amino, anhydride, azide, maleimide, carboxylate, sulphonate, epoxide, ester functional, halogens, hydroxyl, isocyanate or blocked isocyanate, sulfur functional, vinyl and olefin functional, or polymeric structures;
X can be O or S;
Y can be -O, -S, or -NHₓ (where x = 1 or 2); and
R³ may be a moiety comprising nitrosoaromatic, or a nitrosoaromatic precursor as defined herein.

R³ may be a moiety comprising nitrosobenzene, quinone dioxime or quinone oxime.

R¹ may be selected from C₁-C₂₄ alkyl, C₃-C₂₄ acyl. R¹ may be selected from C₁-C₂₄ alkyl, C₃-C₂₄ acyl and R² may be OR¹. X may be O. Y may be O or -NHₓ (where x = 1). Y may be O. X and Y may be O. R¹ may be selected from C₁-C₄ alkyl, X may be O and R² may be OR¹. R¹ may be selected from C₁-C₄ alkyl, X may be O, Y may be O and R² may be OR¹. R¹ may be selected from C₁-C₄ alkyl, X may be O, Y may be - NHₓ (where x = 1) and R² may be OR¹. R¹ may be selected from C₁-C₄ alkyl, X may be O, Y may be O, n may be 3, R² may be OR¹ and R³ may be a moiety comprising nitrosobenzene. R¹ may be selected from C₁-C₄ alkyl, X may be O, Y may be O, n may be 3, R² may be OR¹, R³ may be a moiety comprising nitrosobenzene, q may be 0, and m may be ≥2. R¹ may be selected from C₁-C₄ alkyl, X may be O, Y may be O, n may be 3, R² may be OR¹, R³ may be a moiety comprising nitrosobenzene, q may be 0, m may be ≥2, and R⁴ may be vinyl or ester.

Specific examples of the above mentioned nitrososilane compounds may include the following:

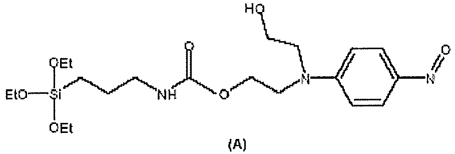

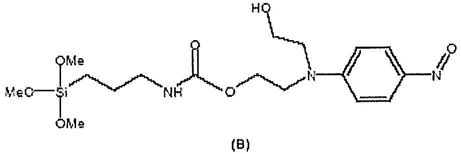

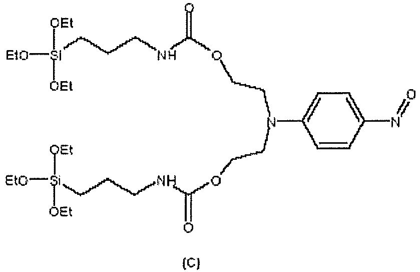

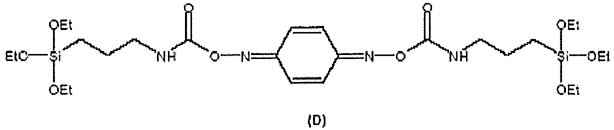

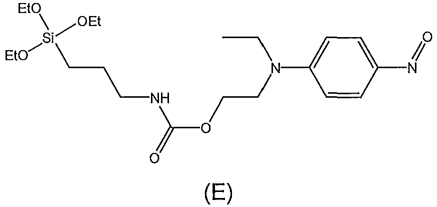

Desirably, the nitroso component of the present invention may be the following compound:

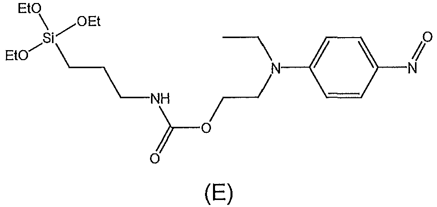

In one embodiment the present invention comprises a particulate material, which is formed by reacting the solid carrier material with a nitroso compound and/or nitroso precursor compound of general formula (I): 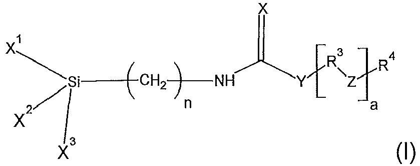
wherein n is from 1 to 20;
X is O or S;
Y is O, S, NH, or N(R³);
a is 0 or 1;
each R³ is independently selected from the group consisting of C₁-C₁₀ alkyl, C₃-C₁₀ cycloalkyl, C₅-C₁₂ aryl, C₄-C₁₂ heteroaryl;
Z is selected from the group consisting of: -CH₂-, O, S, NH, NR³; and
R₄ is selected from the group consisting of: nitrosobenzene, quinone oxime and quinone dioxime;
wherein each of R³ and R₄ are optionally substituted with at least one of -OH, amine, nitro, nitroso, -CN, halogen, C₁-C₁₀ alkyl, C₁-C₁₀ alkoxy, C₃-C₁₀ acyl or C₅-C₁₀ aryl; and wherein,
X¹, X² and X³ are the same or different and are selected from the group consisting of: hydrogen, hydroxyl, -NH₂, -NHR³, C₁-C₂₄ alkyl, C₃-C₂₄ acyl, C₁-C₂₄ alkoxy, C₃-C₂₄ cycloalkyl, C₅-C₁₂ aryl, C₅-C₁₀ aryloxy;
each group optionally substituted with at least one of -OH, -NH₂, C₁-C₅ alkyl, C₁-C₅ alkoxy;
provided that at least one of X¹, X² and X³ allows for covalent attachment of the nitroso compound and/or nitroso precursor compound of the general formula (I) to the solid carrier material.

The skilled person will appreciate that covalent attachment of the nitroso compound and/or nitroso precursor compound to the solid particulate material can be through at least one of X¹, X² or X³ or by displacement of at least one of X¹, X² or X³. For example, if X¹ is -OEt, the particulate material can be formed through the reaction of the nitroso compound and/or nitroso precursor compound with a silica nanoparticle, wherein an -OH on the surface of the silica nanoparticle displaces the X¹ (OEt) group. Alternatively, if X¹ is an alkyl group with a terminal hydroxyl group, for example, - CH₂CH₂OH, the particulate material can be formed through a condensation reaction between the nitroso compound and/or nitroso precursor compound with a silica nanoparticle, wherein covalent attachment is through the oxygen atom of the X¹ group.

In another embodiment, the nitroso compound and/or nitroso precursor compound has the general formula (I); wherein X³ is hydroxyl or C₁-C₂₄ alkoxy.

In yet embodiment, the nitroso compound and/or nitroso precursor compound has the general formula (I); wherein X² and X³ are the same or different and are selected from the group of hydroxyl or C₁-C₂₄ alkoxy.

In a still further embodiment, the nitroso compound and/or nitroso precursor compound has the general formula (I); wherein X¹, X² and X³ are the same or different and are selected from the group of hydroxyl or C₁-C₂₄ alkoxy.

In another embodiment of the present invention, the nitroso compound and/or nitroso precursor compound has the general formula (II): 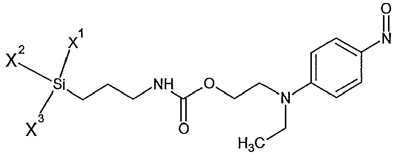 wherein:
X¹, X² and X³ are the same or different and are selected from the group consisting of: hydrogen, hydroxyl, -NH₂, -NHR³, C₁-C₂₄ alkyl, C₃-C₂₄ acyl, C₁-C₂₄ alkoxy, C₃-C₂₄ cycloalkyl, C₅-C₁₂ aryl, C₅-C₁₀ aryloxy;
each group optionally substituted with at least one of -OH, -NH₂, C₁-C₅ alkyl, C₁-C₅ alkoxy;
provided that at least one of X¹, X² and X³ allows for covalent attachment of the nitroso compound and/or nitroso precursor compound of the general formula (I) attached to the solid carrier material.

In another embodiment the nitroso compound and/or nitroso precursor compound has the general formula (II); wherein X³ is a hydroxyl or C₁-C₂₄ alkoxy.

In a still further embodiment the nitroso compound and/or nitroso precursor compound has the general formula (I); wherein X² and X³ are the same or different and are selected from the group of hydroxyl or C₁-C₂₄ alkoxy.

In still another embodiment the nitroso compound and/or nitroso precursor compound has the general formula (II); wherein X¹, X² and X³ are the same or different and are selected from the group of hydroxyl or C₁-C₂₄ alkoxy.

In another embodiment the present invention comprises a particulate material with the general formula (III): 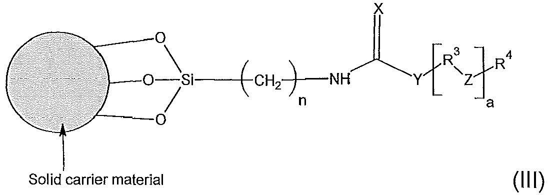
wherein n is from 1 to 20;
X is O or S;
Y is O, S, NH, or N(R³);
a is 0 or 1;
each R³ is independently selected from the group consisting of C₁-C₁₀ alkyl, C₃-C₁₀ cycloalkyl, C₅-C₁₂ aryl, C₄-C₁₂ heteroaryl;
Z is selected from the group consisting of: -CH₂-, O, S, NH, NR³; and
R₄ is selected from the group consisting of: nitrosobenzene, quinone oxime and quinone dioxime;
wherein each of R³ and R⁴ are optionally substituted with at least one of -OH, amine, nitro, nitroso, -CN, halogen, C₁-C₁₀ alkyl, C₁-C₁₀ alkoxy, C₃-C₁₀ acyl or C₅-C₁₀ aryl.

In another embodiment the present invention comprises a particulate material with the general formula (IV):

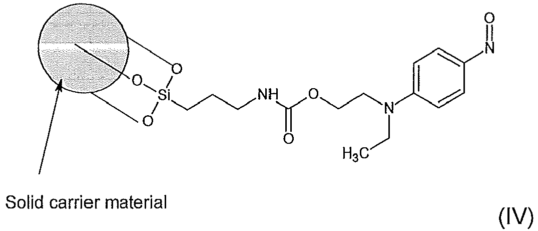

In another embodiment the present invention comprises a particulate material of general formula (V): 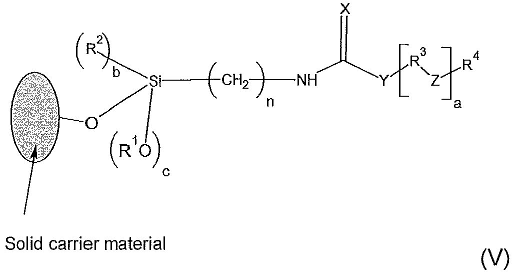
wherein n is from 1 to 20;
c is from 1 to 2, b is from 0 to 1, with the proviso that b+c = 2;
each R¹ is independently selected from the group consisting of H, C₁-C₂₄ alkyl, and C₃-C₂₄ acyl, preferably from C₁-C₄ alkyl and wherein when c > 1 at least one R¹ is not hydrogen; each R² is independently selected from the group consisting of C₁-C₂₄ alkyl and C₃-C₂₄ acyl, preferably from C₁-C₄ alkyl;
X is O or S;
Y is O, S, NH, or N(R³);
a is 0 or 1;
each R³ is independently selected from the group consisting of C₁-C₁₀ alkyl, C₃-C₁₀ cycloalkyl, C₅-C₁₂ aryl, C₄-C₁₂ heteroaryl;
Z is selected from the group consisting of: -CH₂-, O, S, NH, NR³; and
R⁴ is selected from the group consisting of: nitrosobenzene, quinone oxime and quinone dioxime;
wherein each of R³ and R⁴ are optionally substituted with at least one of -OH, -NH₂, nitro, nitroso, -CN, halogen, C₁-C₁₀ alkyl, C₁-C₁₀ alkoxy, C₃-C₁₀ acyl or C₅-C₁₀ aryl.

The present invention provides a novel component for use in vulcanisation and/or bonding compositions.

Some embodiments of the present invention comprise compositions comprising a particulate carrier material to which a nitroso or nitroso precursor compound is bound.

One embodiment of the present invention provides a curable composition comprising:
(a) a particulate material to which a nitroso and/or nitroso precursor is attached; and
(b) one or more reactive components that cure upon exposure to suitable conditions.

The term "reactive components that cure upon exposure to suitable conditions" as used herein refers to monomers, oligomers, or polymers made from natural or synthetic, modified or unmodified resins which are not fully cured and/or crosslinked, e.g., which are capable of being further cured and/or crosslinked by exposing said reactive components to suitable conditions, such as heat.

Examples of suitable reactive components include but are not limited to cyanate esters, acrylates, methacrylates, in monomeric, oligomeric or polymeric forms; epoxy resins, maleimide resins, polyurethanes, hydroxy functionalised resins such as polyvinyl butyral (PVB), cellulose acetate butyrate (CAB), phenolic resins and combinations thereof.

In a preferred embodiment the "reactive components that cure upon exposure to suitable conditions" means crosslinkable polymer components (for example, an elastomeric material, such as uncured rubber), that cure on exposure to heat, whereby application of heat results in increased crosslinking, which has the effect of increasing the molecular weight of the polymer. Preferably, these components crosslink at temperatures greater than 50°C.

Traditionally, reactive components can be used in combination with additive components, which facilitate the curing or crosslinking reaction of said reactive components. Examples of additive components include alkoxy silanes and aromatic nitroso compounds or precursor compounds (examples of these components and compositions are disclosed in International publication WO 2011/029752 ).

Such additive components are increasingly coming under environmental scrutiny and stricter controls.

The present invention addresses many of these issues and provides a desirable alternative cross-linking agent.

Nitroso structures are recognised in the art to assist in the formation of desirable bonds to polymeric substrates, such as elastomeric substrates. Cure conditions for these compounds are described herein.

One aspect of the present invention, which comprises a particulate carrier material to which a nitroso or nitroso precursor compound is bound, provides a viable alternative to some traditional additives, such as peroxides or metal oxides, which have come under environmental scrutiny in recent years.

In the improved composition of the invention described above, the compound comprising the at least one alkoxy silane moiety and the at least one moiety selected from an aromatic nitroso or an aromatic nitroso precursor (also referred to as a nitrososilane) may be present in an amount of 1 to 20% w/w of the total composition. Suitably, the at least one aromatic nitroso compound precursor may be present in an amount of 1 to 15% w/w, for example, from 4 to 12% w/w. Desirably, the at least one aromatic nitroso compound precursor may be present in 6% w/w of the total composition.

The invention also provides a composition for bonding an elastomeric material such as a rubber material to a substrate, the composition comprising:
(a) a particulate carrier material to which a nitroso or nitroso precursor compound is bonded; and
(b) a polymer having a hydroxyl functional group.

Suitable polymers having a hydroxyl functional group include: Mowital B60H (polyvinyl butyral) or Eastman CAB 381-20 (cellulose acetate butyrate).

Some embodiments of the present invention may contain within the composition, conventional additives such as fillers, pigments, stabilizers, moisture scavangers, carbon blacks (acidic or basic), silica etc. subject to said additives not interfering with effective curing of the compositions.

The invention further provides a composition for cross-linking an elastomeric material such as a rubber material to form a elastomeric product, the composition comprising:
(a) a particulate material to which a nitroso or nitroso precursor is attached; and
(b) a curable material for curing to form an elastomer.

As used herein, the terms "elastomer", "elastomeric substrate" or "elastomeric material" are used interchangeably in the present invention. The terms preferably refer to a material that can undergo a substantial elongation and then returns to its approximately original dimensions upon release of the stress elongating the material. More preferably the elastomeric substrate has a permanent set of less than 50%, such as less than 30% or less than 10% after one minute when recovering from a strain of 100% applied for one minute at a temperature of 22°C.

In one embodiment the elastomer or elastomeric substrate may be selected from natural or synthetic rubbers, wherein the improved curable compositions of the present invention are particularly suitable for bonding polar rubbers, like nitrile butadiene rubbers (NBR), hydrogenated nitrile butadiene rubbers (HNBR) and/or ethylene acrylic elastomers to rigid substrates, such as metallic substrates. The synthetic rubber may be a nitrile butadiene rubber (HNBR). The polymer may be a C₂-C_{1,000,000} polymer, such as a C₂-C_{10,000} polymer. Other suitable polymers, include those capable of reacting with nitroso groups so as to provide cross-links therebetween. Such a reaction produces a variety of cross-links, for example between the nitroso group and a rubber material. The materials of the invention are thought to reduce free nitroso groups as the nitroso group is within a molecular structure.

Suitably, the improved compositions of the invention may also be used in the vulcanisation application as well as bonding of polymeric substrates, such as elastomeric substrates to any of a wide variety of useful materials, including for example other elastomers, non-elastomeric but flexible materials such as for example fabrics or films, and rigid materials such as plastics, engineering plastics, wood, metal, glass or other hydroxylated substrates. The improved compositions of the invention, improve the adhesion provided by known compositions whereby durability of the bond between substrate is improved as a result of the presence of the particulate carrier material to which a nitroso or nitroso precursor compound is attached.

In examples utilising an elastomeric, such as a rubber substrate, the elastomer may be vulcanised or crosslinked prior to bonding to the second substrate.
Alternatively, the elastomeric substrate may be vulcanised or crosslinked concurrently with bonding to the second substrate. The second substrate may be a metal. The nitroso aromatic compound of the composition of the present invention may become anchored to the elastomeric substrate.

On polymerisation, the nitroso groups of the compounds of the composition can react with polymers, in particular a polymer with diene or allylic functionality within the polymer chain. Reaction of a nitroso group and an allylic group on the polymer occurs *via* an alder-ene reaction. Such a reaction produces a variety of cross-links, for example between the nitroso group and a elastomeric material.

Suitably, the improved composition of the invention may also be used for bonding polar elastomeric materials, such as nitrile butadiene rubbers (NBR), hydrogenated nitrile butadiene rubbers (HNBR) and/or ethylene acrylic elastomers to metallic substrates.

Alternatively, the improved compositions may be applied to a metal or a hydroxylated surface. This means that application to either the polymeric substrate such as a rubber or a metal or glass substrate or unvulcanised rubbers are both possible. Thus a rubber substrate may be vulcanised or crosslinked prior to bonding to the metal or hydroxylated surface. The rubber substrate may be vulcanised or crosslinked concurrently with bonding to the metal surface.

Certain requirements must be fulfilled by a curing system in order to allow it to be successfully employed in a production environment. For example, the curing system must be easy to process. This means that it should be stable for use. Issues with the prior compositions have included a tendency to sediment. Accordingly, it is desirable that the curing system has a low tendency to sediment.

Furthermore, the curing system should be easy to apply. For example, it should be convenient to apply by any suitable dispensing system. It is also desirable that it dries quickly so that components can be handled without applied material running off and/or fouling production equipment. It is also desirable that the curing system shows good wetting properties for ease of application and spreading, for instance.

It is also desirable to have good curing strengths. This curing should be achieved independently of the type of elastomer (rubber) employed and also independently of the type of substrate. It will be appreciated that some rubbers are blended materials and accordingly it is desirable that good curing is achieved with such blended materials. Suitably consistent curing is achieved under various process parameters.

It is desirable that the bonds and in particular the substrate/metal bond, such as rubber/metal joint, are durable under high pressure and even if exposed to an aggressive atmosphere, for example, a hot liquid such as oil. The bonds must also be durable against relatively high mechanical stress, under conditions involving any of high pressure, temperature and/or moisture.

The improved compositions of the invention can be easily applied at the interface between the polymer and the substrate and may assist in developing strong and durable bonds during the curing process.

Other embodiments of the present invention may comprise an at least one additional crosslinking agent.

The additional crosslinking agent may be selected from the group consisting of: epoxy resins, phenolic resins, melamine resins, isocyanates, anhydrides, aldehydes, each of which having at least two reactive moieties, and mixtures thereof. Examples of such crosslinking agents are shown below. 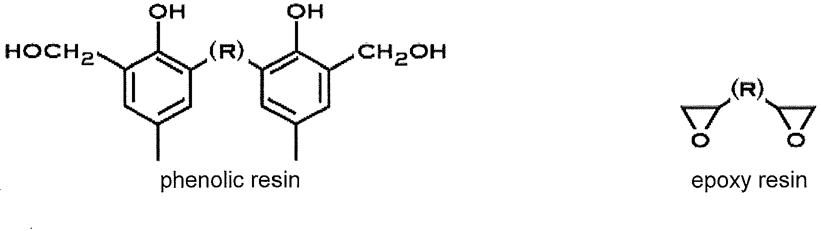 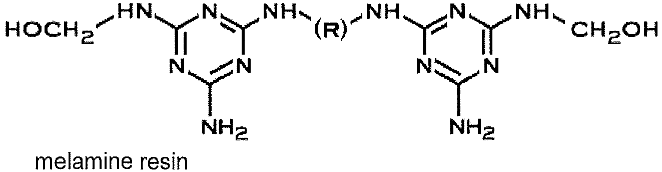 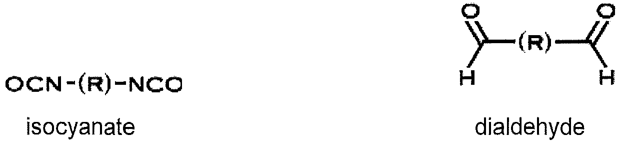 wherein R are a linking group which may be made of single moieties or repeating units or intermediate chains onto which the functional groups are located at opposing terminating ends. The skilled person will appreciate that such chains R may contain repeating aliphatic or aromatic groups, or combinations thereof, and that these groups can be substituted or unsubstituted with further groups, for example, branched or unbranched alkyl groups having from 1 to 6 carbons.

Examples of suitable crosslinking agents are phenol formaldehyde resins, polyfunctional aldehydes, polyfunctional epoxides, melamine resins (such as melamine formaldehyde resins) and polyfunctional isocyanates.

Suitable epoxy resins may vary in chemical identity. Preferred epoxy resins may be selected from (a) epoxy resins comprised mainly of the monomeric diglycidyl ether of bisphenol-A; (b) epoxy resins comprised mainly of the monomeric diglycidyl ether of bisphenol-F; (c) epoxy resins comprised mainly of the hydrogenated diglycidyl ether of bisphenol-A; (d) polyepoxidized phenol novolacs; (e) diepoxides of polyglycols, alternatively known as an epoxy terminated polyether; or (f) a mixture of any of the foregoing epoxy resins of (a) through (e). To save unnecessarily detailed description, further information on these classes is in the Encyclopedia of Polymer Science and Technology, Volume 6, 1967, Interscience Publishers, N.Y., pages 209-271.

Particularly preferred crosslinking agents are selected from epoxy resins having at least two oxirane ring systems and/or phenolic resins. Desirably, the crosslinking agent is a phenolic resin. Phenolic resins are well known in the art.

It will be understood that depending on the nature of the compound having at least two reactive moieties, the crosslinking reaction may be for example a condensation reaction with a hydroxy group of a hydroxyl substituted resin (eliminating water or other small molecule). In the case where the at least one crosslinking agent is an epoxide with at least two epoxide groups, such as a diepoxide, wherein each epoxide group can undergo a nucleophilic substitution or epoxide ring opening reaction with the hydroxy group of the hydroxylated resin.

It will be appreciated by a person skilled in the art that the various improved curable compositions of the present invention may additionally comprise conventional additives such as fillers, pigments, stabilisers, and moisture scavengers, provided that the additives do not interfere with effective curing of the compositions. The composition may comprise regular carbon blacks. Such carbon blacks may be acidic or basic. These include reinforcing carbon blacks; inactive fillers such as calcium carbonates, chalks, talcs, or metal oxides; accelerator systems; vulcanization retarders; promoters such as zinc oxide or stearic acid; plasticizers such as aromatic, paraffinic, naphthenic and synthetic mineral oils; ageing, light-protecting ozone-protecting, fatigue, coloration, and processing auxiliaries; and sulfur. Commonly these additives may be present at a quantity of 0.1 parts to 80 parts per 100 parts by weight of the rubber composition.

The various improved curable compositions of the present invention may additionally comprise a solvent. The solvents can be any suitable solvent such as esters, ethers, ketones, alcohols, both aromatic and aliphatic hydrocarbons as well as halogenated and non halogenated hydrocarbons or combinations thereof.

The composition may comprise silica. The composition may comprise polyvinyl butyral resin.

Suitably, certain improved compositions of the present invention may comprise additional silanes. Suitable silane compounds and composition comprising same are disclosed in International publication WO 2011/029752 . Exemplary silanes may be of the general formula: 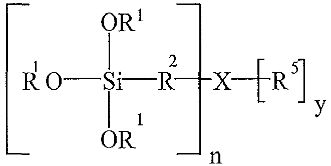 where:
n is either 1 or 2;
y = (2-n)
each R¹ can be selected from C₁-C₂₄ alkyl or C₂-C₂₄ acyl;
each R² can be selected from C₁-C₃₀ aliphatic groups, or substituted or unsubstituted C₆-C₃₀ aromatic groups;
R⁵ can be selected from hydrogen, C₁-C₁₀ alkylene, C₁-C₁₀ alkylene substituted with one or more amino groups, C₂-C₁₀ alkenylene substituted with one or more amino groups, C₆-C₁₀ arylene, or C₇-C₂₀ alkarlyene;
X- R⁵ is optional and X is either: 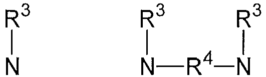
   where each R³ can be selected from hydrogen, C₁-C₃₀ aliphatic groups, or C₆-C₃₀ aromatic groups; and
   R₄ can be selected from C₁-C₃₀ aliphatic groups, or C₆-C₃₀ aromatic groups; and where when n = 1, at least one of R³ and R⁵ is not hydrogen.

In one embodiment, X-R⁵ is present. R¹ can be selected from C₁-C₂₄ alkyl, R² can be selected from C₁-C₃₀ aliphatic groups, X can be N- R³ and R⁵ can be selected from hydrogen or C₁-C₁₀ alkylene. As will be appreciated, when X-R⁵ is absent the silane may be of the general formula (wherein R¹ and R² are as defined above):

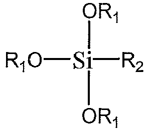

Preferred silanes include bis-silyl silanes such as those having two trisubstituted silyl groups. The substituents may be individually chosen from C₁-C₂₀ alkoxy, C₆-C₃₀ aryloxy and C₂-C₃₀ acyloxy. Suitable bis-silyl silanes for use in the improved compositions of the invention include: 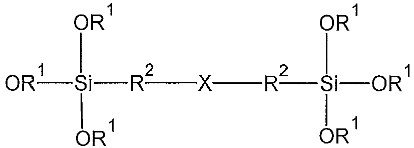 where:
each R¹ can be selected from C₁-C₂₄ alkyl or C₂-C₂₄ acyl;
each R² can be selected from C₁-C₂₀ aliphatic groups or C₆-C₃₀ aromatic groups;
X is optional and is either: 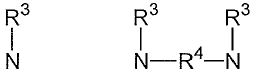
   where each R³ can be selected from hydrogen, C₁-C₂₀ aliphatic groups, or C₆-C₃₀ aromatic groups; and
   R⁴ can be selected from C₁-C₂₀ aliphatic groups or C₆-C₃₀ aromatic groups.

In one embodiment, X is present. R¹ can be selected from C₁-C₂₄ alkyl, R² can be selected from C₁-C₃₀ aliphatic groups, and X can be N- R³. As will be appreciated, when X is absent the bis-silane may be of the general formula (wherein R¹ and R² are as defined above):

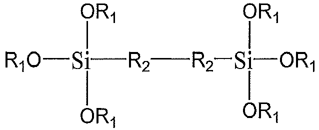

Examples of some bis-silyl aminosilanes used in the improved composition of the invention include: bis-(trimethoxysilylpropyl)amine, bis-(triethoxysilylpropyl)amine, bis-(triethoxysilylpropyl) ethylene diamine, N-[2-(vinylbenzylamino)ethyl]-3-aminopropyltrimethoxy silane, and aminoethyl-aminopropyltrimethoxy silane.

Such silanes may be included in the range from 1:3 to 3:1 relative to the nitrososilane compounds (stoichiometrically). As understood in the art, such mixing of silanes and nitrososilanes can result in excellent bonding to rubber substrates.

The silane may be present in an amount of 1 to 10% w/w of the total composition. Suitably, the silane may be present in an amount of 1 to 5% w/w, for example 1 to 3% w/w. The silane may be present in 3% w/w of the total composition.

In particular, the inclusion of the amino bis(propyltrimethoxysilane) in addition to the nitrososilane significantly enhances the bond strength to rubber. It is thought that the amino bis(propyltrimethoxysilane) has multiple functions within the formulation. This includes aiding the film forming and "wetting" of the metal surface.

Desirably, in other embodiments of the present invention, in addition to the above described particulate carrier material to which an aromatic nitroso or an aromatic nitroso precursor compound is bound, the composition of the invention may further comprise a compound comprising at least one phosphonate moiety and/or at least one phosphinate moiety.

Examples of these phorphorus compounds and composition comprising same may be found in International publication WO 2011/032998 . During curing, in the reaction of the nitroso group and the phosphonate/phosphinate, the nitroso may react with allylic functionality within a natural rubber while the phosphonate/phosphinate forms a bond with the second substrate, such as a hydroxylated surface or metal.

Suitably, the phosphonate moiety may be of the structure: 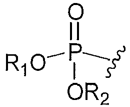 where R₁ and R₂ are the same or different and are selected from H, C₁-C₂₄ alkyl, and C₃-C₂₄ acyl.

R₁ and R₂ may be the same or different and may be selected from C₁-C₄ alkyl.

Suitably, the phosphinate moiety may be of the structure: 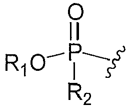
where R₁ is selected from H, C₁-C₂₄ alkyl, and C₃-C₂₄ acyl; and
R2 is selected from C₁-C₂₄ alkyl, and C₃-C₂₄ acyl; and
R₁ and R₂ may be selected from C₁-C₄ alkyl.

In each of the above structures the squiggle indicates attachment to a moiety comprising an aromatic nitroso, an aromatic nitroso precursor or combinations thereof, as defined above.

Suitably, a compound for use in the improved composition of the invention may be of the general structure: 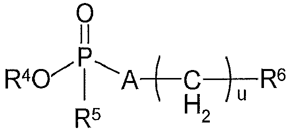 wherein u is from 0 to 20; A is a direct bond, O, or S; R⁴ is selected from the group consisting of H, C₁-C₂₄ alkyl, and C₃-C₂₄ acyl, preferably from C₁-C₄ alkyl; R⁵ is selected from the group consisting of C₁-C₂₄ alkyl, C₁-C₂₄ alkoxyl and C₃-C₂₄ acyl; and R⁶ is a moiety comprising nitrosobenzene, quinone oxime or quinone dioxime.

R₁, R₂ and R₃ can be the same or different and may be selected from C₁-C₄ alkyl. n may be 0 to 5. n may be 1 to 4. R₄ may be a moiety comprising nitrosobenzene, quinone dioxime or quinone oxime, as defined above. X may be C, O or N. X may be C or O. X may be C. X may be O.

Structures for R₄ above may be selected from (showing linkage through X): 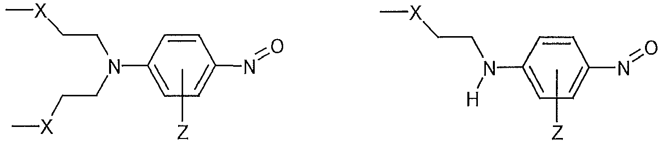 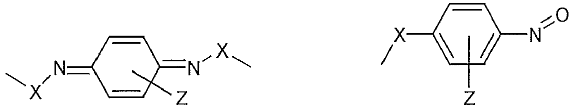 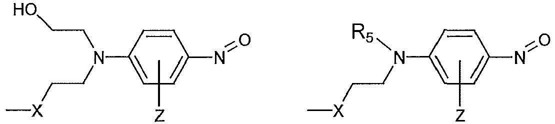
where R₅ can be C₁ to C₁₀ alkyl; and
Z indicates that the rings of the above structures can optionally be substituting mono-, di-, tri- or tetrasubstituted with the group consisting of C₁-C₂₀ alkyl, C₃-C₂₀ cycloalkyl, C₁-C₂₀ alkoxy, C₇-C₂₀ aralkyl, C₇-C₂₀ alkaryl, C₅-C₂₀ arylamine, C₅-C₂₀ arylnitroso, amino, hydroxy, halogen and combinations thereof, and further wherein the substituents can either be the same or different on each carbon atom of the ring. Such substitutions may be possible provided there is no interference with effective bonding or curing of the compositions. For example, provided there is no interference with the generation of a nitrosobenzene compound *in-situ.*

In an improved composition a suitable phosphonate or phosphinate compound may be of the general formula: 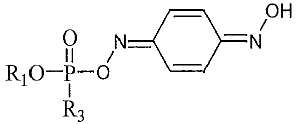
where R₃ can be C₁-C₂₄ alkyl, C₃-C₂₄ acyl or OR₂;
R₁ and R₂ can be the same or different and are selected from H, C₁-C₂₄ alkyl, and C₃-C₂₄ acyl.

R₁, R₂ and R₃ can be the same or different and may be selected from C₁-C₄ alkyl.

Further suitable phosphorous compounds may be of the following general structure; 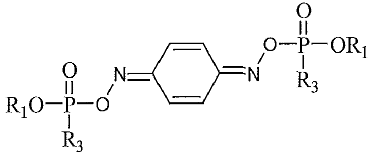
where R₃ can be C₁-C₂₄ alkyl, C₃-C₂₄ acyl or OR₂;
R₁ and R₂ can be the same or different and are selected from H, C₁-C₂₄ alkyl, and C₃-C₂₄ acyl.

R₁, R₂ and R₃ can be the same or different and may be selected from C₁-C₄ alkyl.

The invention provides for a polymer or co-polymer of a compound according to the present invention.

In another example of the invention, in addition to the above described particulate carrier material to which an aromatic nitroso or an aromatic nitroso precursor compound is bound, the improved composition of the invention may further comprise an oligomer or a co-oligomer comprising at least one phosphonate moiety and/or at least one phosphinate moiety, where a co-oligomeric compound is composed of different monomers.

The oligomer or a co-oligomer may have the following general structural formula: 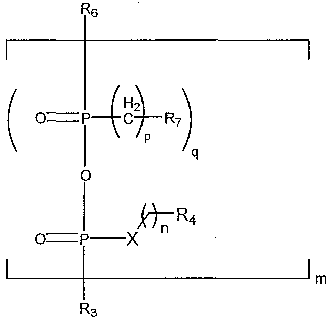
where m can be 1-100; n can be 0-20; p can be 1-10; q can be 0-50; and if q = 0, m ≥2;
R₃ and R₆ can be the same or different and may be selected from C₁-C₂₄ alkyl, C₃-C₂₄ acyl or OR₂;
R₂ can be selected from H, C₁-C₂₄ alkyl, and C₃-C₂₄ acyl; X can be C, O, N, or S;
R₄ may be a moiety comprising nitrosoaromatic, or a nitrosoaromatic precursor (defined above); and
R₇ can be selected from acrylate, aldehyde, amino, anhydride, azide, maleimide, carboxylate, sulfonate, epoxide, ester functional, halogens, hydroxyl, isocyanate or blocked isocyanate, sulfur functional, vinyl and olefin functional, or polymeric structures.

R₂, R₃ and R₆ can be the same or different and may be selected from C₁-C₄ alkyl. n may be 0 to 5. n may be 1 to 4. p may be 1 to 5. q may be 1 to 5. R₄ may be a moiety comprising nitrosobenzene, quinone dioxime or quinone oxime. X may be C, O or N. X may be C or O. X may be C. X may be O.

A preferred compound (also referred to as a nitrosophosphonate or a nitrosophosphinate) forming part of the improved composition of the invention may be present in an amount of 1 to 20% w/w of the total composition. Suitably, the compound may be present in an amount of 1 to 15% w/w, for example 4 to 12% w/w. The compound may be present in 6% w/w of the total composition.

In bonding, the phosphinate/phosphonate moiety of the compound will anchor to the surface of the metal or the hydroxylated surface. The moiety selected from an aromatic nitroso or an aromatic nitroso precursor will generally become anchored to the polymer, for example a rubber material. Accordingly, each end of the molecule is functionalised and assists in bonding the materials together with a strong and durable bond.

In another embodiment of the present invention the nitroso phosphorous compounds are bonded to a particulate carrier material.

The invention includes a process for bonding or vulcanising comprising providing an adhesive or a rubber forming composition which comprises the particulate material of the invention and bonding or vulcanising utilising the composition.

Within the scope of the invention there is provided a process for the preparation of a particulate material comprising a solid carrier material to which a nitroso and/or nitrosoprecursor compound is covalently attached, comprising the steps of:
(i) providing a solid carrier material;
(ii) providing a nitroso compound and/or nitroso precursor compound;
(iii) covalently attaching the solid carrier material of step (i) and the nitroso compound and/or nitroso precursor compound of step (ii) to each other
to form a particulate carrier material optionally with a volume average particle diameter of from 50 nm to 500 µm.

In some embodiments of the present invention, the solid carrier material may be formed in-situ.

Within the scope of the invention there is a process of forming a particulate material comprising a solid carrier material to which a nitroso compound and/or nitroso precursor compound is attached, comprising the steps of:
(i) providing a suspension of silicaceous particles;
(ii) providing a nitrososilane or nitrososilane precursor material; and
(iii) covalently attaching the silicaceous particles of step (i) and the nitrososilane and/or nitrososilane precursor compound of step (ii) to eachother to form a silicaceous carrier material optionally with a volume average particle diameter of from 50 nm to 500 µm.

Within the process of the invention, the suspension of silicaceous particles may be silicaceous nanoparticles that are formed in-situ.

The solid carrier material and the nitroso compound and/or nitroso precursor compound, may be covalently attached to the each other by a condensation reaction.

The suspension of silicaceous particles may be formed from a tetra-alkylorthosilicate material for example tetra-ethylorthosilicate.

### Drawings

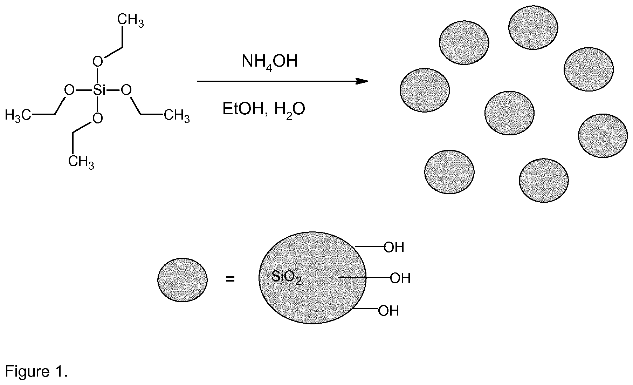

Figure 1 outlines the synthesis of silica nanoparticles via the Stober reaction.

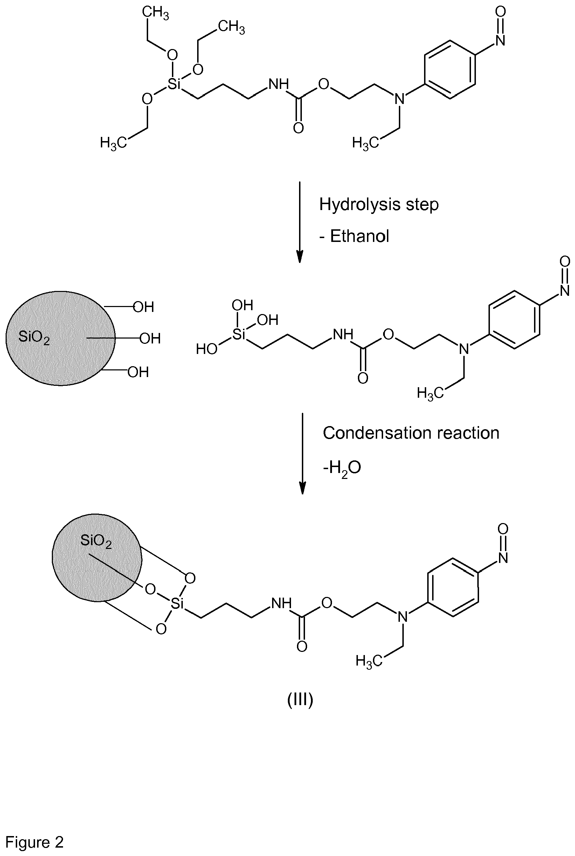

Figure 2 outlines the synthesis of a representative carrier particle of the present invention.

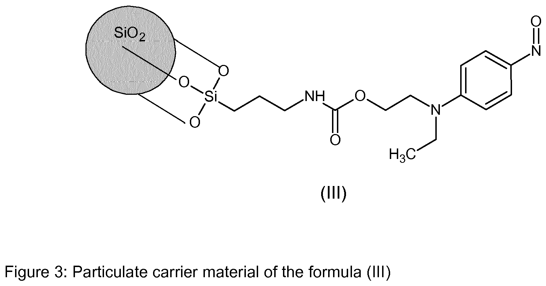

Figure 3 shows a representative carrier particle of the present invention of the general formula (III).

### Experimental

Nitrosilane (E) was synthesized according to established methods.

The following assumptions were made:
APTES footprint is 50 Å². (See for example: E.F. Vansant, P. van der Voort, K.C. Vrancken, Characterisation and Chemical Modification of the Silica Surface, Volume 93, Elsevier, 1995).

Nitrososilane footprint can be approximated with APTES.

SiO₂ nanoparticles produced have a mean particle size of 100 nm.

TEOS (12 mL), NH₄OH (9.9 mL, 25%) and EtOH (141 mL) were combined and left to stir for 72h at room temperature. After this time a white, cloudy suspension was evident. The sol was then split into two equal aliquots, aliquote (i) and aliquote (ii).
*Sample A:* SiO₂ nanoparticle sol (aliquote (i)) was allowed to stir for 24h at RT. (reference sample)
*Sample B:* Nitrososilane solution (50%, 1.13 g) was added to the SiO₂ nanoparticle sol (aliquote (ii)) and the resulting solution was allowed to stir for 24h at RT.

Both samples were purified by the same procedure. A hexane washing step (-40 mL) was carried out and repeated for a total of three times to yield a cloudy suspension which was then dried *in vacuo* to yield a white (Sample A) or green (Sample B) solid. Finally these solids were dried overnight at 85°C in an oven to remove any residual ethanol.

The result nanoparticles were characterised by the following methods:

| **Method of Analysis** | **Sample A** | **Sample B** |
|---|---|---|
| **TGA** | 6% wt loss | 9% wt loss |
| **DLS Hydrodynamic radius (nm)** | 130 | 169 |
| **Zeta potential (mV)** | -37.7 | -15.9 |
| **UV-vis** | No absorbance | λmax = 426nm |

Functionalisation at this point has been deemed to be successful. An increase in hydrodynamic diameter (particle size) was observed in the case of Sample A vs Sample B. Also a change in zeta potential (surface charge) was recorded. The fact that a decrease in zeta potential was recorded could signify that less than monolayer coverage was achieved.

The volume average particle size can be determined in solution by means of dynamic light scattering on a Beckman Coulter N5 particle size analyser, equipped with a 25 mW helium-neon laser (623.8 nm) and fibre optic detection system. Samples were prepared in ethanol (viscosity 1.2 cP at 20 °C, refractive index 1.3611) and measurements were performed at a concentration which produced a count value of less than 1 x 10⁶ counts at an angle of 90°. Unimodal analysis was used to determine the mean-scattering-intensity-weighted particle size and the standard deviation of the size distribution. Experiments were performed using an angle of 90°, at a temperature of 20 °C. Run time (automatic) was 200 seconds and sample time (automatic) was 3 seconds. The diluent was ethanol. Size distribution processor (SDP) analysis was performed automatically with a range selection of 0-500 nm. Equilibrium time was 5 minutes and 3 repeat runs were averaged.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A particulate material comprising:
(i) a solid carrier material, and
(ii) a nitroso compound and/or an aromatic oxime as a nitroso precursor compound
wherein said nitroso compound and/or said nitroso precursor compound is covalently bonded to the solid carrier material, and wherein the solid carrier material is a silicaceous material and/or the particulate carrier material is particulate silica.

2. The particulate material according to Claim 1 wherein the solid carrier material comprises one or more hydroxyl groups through which the nitroso compound and/or nitroso precursor compound is bonded to the carrier material.

3. The particulate material according to any preceding claim wherein the volume average particle size of the particulate carrier material is from 10 nm to 500 µm, for example, from 50 nm to 200 µm, such as from 50 nm to 1,000 nm, including from 200 nm to 1,000 nm, and from 50 nm to 200 nm.

4. The particulate material according to any preceding claim wherein the nitroso compound and/or nitroso precursor compound is bonded to the solid carrier material through the oxygen atom of one or more groups containing an Si-O moiety, preferably the nitroso compound and/or nitroso precursor compound is bonded to the solid carrier material through one or more of the oxygen atoms of one or more groups containing an -Si(OR)₂O- moiety, wherein each R is independently selected from the group of C₁-C₂₄ alkyl, C₃-C₂₄ acyl, C₃-C₂₄ cycloalkyl, C₅-C₁₂ aryl, C₄-C₁₂ heteroaryl; and is optionally substituted with at least one of -OH, amine, nitro, nitroso, -CN, halogen, C₁-C₁₀ alkyl, C₃-C₁₀ acyl, C₁-C₁₀ alkoxy, or C₅-C₁₀ aryl.

5. The particulate material according to any preceding claim wherein the nitroso compound and/or nitroso precursor compound is attached to the solid carrier material by reacting at least one C₁-C₁₀ alkoxy silane group, preferably a C₁-C₃ alkoxy silane group of the nitroso compound and/or nitroso precursor compound with one or more hydroxyl groups of the solid carrier material.

6. The particulate material according to any preceding claim wherein the nitroso compound is a nitroso silane molecule.

7. The particulate material according to any preceding claim, which is formed by reacting the solid carrier material with a nitroso compound and/or nitroso precursor compound of general formula (I) 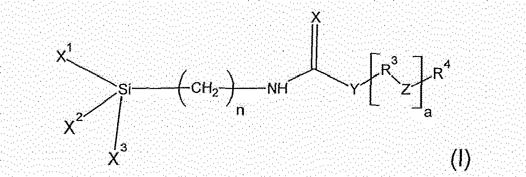
wherein n is from 1 to 20;
X is O or S;
Y is O, S, NH, or N(R³);
a is 0 or 1;
each R³ is independently selected from the group consisting of C₁-C₁₀ alkyl, C₃-C₁₀ cycloalkyl, C₅-C₁₂ aryl, C₄-C₁₂ heteroaryl;
Z is selected from the group consisting of: -CH₂-, O, S, NH, NR³; and
R⁴ is selected from the group consisting of: nitrosobenzene, quinone oxime and quinone dioxime;
wherein each of R³ and R⁴ are optionally substituted with at least one of -OH, amine, nitro, nitroso, -CN, halogen, C₁-C₁₀ alkyl, C₁-C₁₀ alkoxy, C₃-C₁₀ acyl or C₅-C₁₀ aryl; and
wherein,
X¹, X² and X³ are the same or different and are selected from the group consisting of: hydrogen, hydroxyl, -NH₂, -NHR³, C₁-C₂₄ alkyl, C₃-C₂₄ acyl, C₁-C₂₄ alkoxy, C₃-C₂₄ cycloalkyl, C₅-C₁₂ aryl, C₅-C₁₀ aryloxy;
each group optionally substituted with at least one of -OH, amine, C₁-C₅ alkyl, C₁-C₅ alkoxy;
provided that
at least one of X¹, X² and X³ allows for covalent attachment of the nitroso compound and/or nitroso precurosor compound of the general formula (I) to the solid carrier material.

8. The particulate material according to claim 7 with the general formula (II)

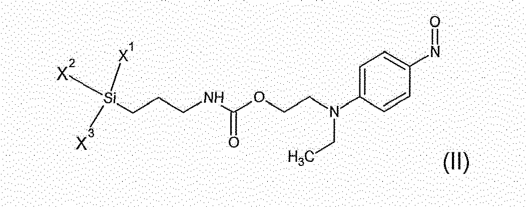

9. The particulate material according to claim 7 wherein X³ is hydroxyl or C₁-C₂₄ alkoxy, or wherein X² and X³ are the same or different and are selected form the group of hydroxyl or C₁-C₂₄ alkoxy, or wherein X¹, X² and X³ are the same or different and are selected from the group of hydroxyl or C₁-C₂₄ alkoxy.

10. The particulate material according to any preceding claim wherein the nitroso compound has the general formula (V): 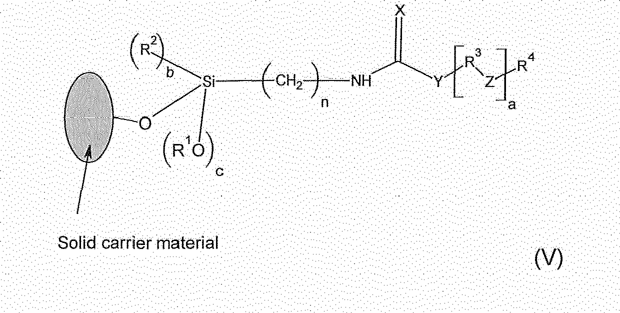
wherein n is from 1 to 20;
c is from 1 to 2, b is from 0 to 1, with the proviso that b+c = 2;
each R¹ is independently selected from the group consisting of H, C₁-C₂₄ alkyl, and C₃-C₂₄ acyl, preferably from C₁-C₄ alkyl and wherein when c > 1 at least one R¹ is not hydrogen; each R² is independently selected from the group consisting of C₁-C₂₄ alkyl and C₃-C₂₄ acyl, preferably from C₁-C₄ alkyl;
X is O or S;
Y is O, S, NH, or N(R³);
a is 0 or 1;
each R³ is independently selected from the group consisting of C₁-C₁₀ alkyl, C₃-C₁₀ cycloalkyl, C₅-C₁₂ aryl, C₄-C₁₂ heteroaryl;
Z is selected from the group consisting of: -CH₂-, O, S, NH, NR³; and
R⁴ is selected from the group consisting of: nitrosobenzene, quinone oxime and quinone dioxime;
wherein each of R³ and R⁴ are optionally substituted with at least one of -OH, -NH₂, nitro, nitroso, -CN, halogen, C₁-C₁₀ alkyl, C₁-C₁₀ alkoxy, C₃-C₁₀ acyl or C₅-C₁₀ aryl.

11. A particulate material according to any preceding claim wherein the nitroso precursor compound is an aromatic oxime, for example at least one of a quinone dioxime or a quinone oxime or combinations thereof.

12. A process for the preparation of the particulate material according to any preceding claim comprising the steps of:
(i) providing a solid carrier material;
(ii) providing a nitroso compound and/or nitroso precursor compound;
(iii) covalently attaching the solid carrier material of step (i) and the nitroso compound and/or nitroso precursor compound of step (ii) to each other
to form a particulate carrier material optionally with a volume average particle diameter of from 50 nm to 500 µm, preferably the nitroso compound and/or nitroso precursor compound and the carrier material are covalently attached to each other by a condensation reaction.

13. The process of claim 12 wherein the carrier material is formed in-situ, preferably the carrier material comprises silica nanoparticles that are formed in-situ, more preferably the silica nanoparticles are formed in-situ from a tetra-alkylorthosilicate, such as tetra-ethylorthosilicate (TEOS).

14. A composition comprising:
(a) a particulate material according to any preceding claim; and
(b) one or more reactive components that cure upon exposure to suitable conditions.

15. A composition for bonding an elastomeric material such as a rubber material to a substrate the composition comprising:
(a) a particulate material according to any preceding claim; and
(b) a polymer having a hydroxyl functional group.

16. A composition for cross-linking an elastomeric material such as a rubber material to form a elastomeric product, the composition comprising:
(a) a particulate material according to any of Claims 1 to 11; and
(b) a curable material for curing to form an elastomer.

## Patentansprüche

1. Teilchenförmiges Material, umfassend:
(i) ein festes Trägermaterial und
(ii) eine Nitrosoverbindung und/oder ein aromatisches Oxim als Nitroso-Vorstufenverbindung,
wobei die Nitrosoverbindung und/oder die Nitroso-Vorstufenverbindung kovalent an das feste Trägermaterial gebunden sind/ist und wobei es sich bei dem festen Trägermaterial um ein siliciumdioxidhaltiges Material handelt und/oder es sich bei dem teilchenförmigen Trägermaterial um teilchenförmiges Siliciumdioxid handelt.

2. Teilchenförmiges Material nach Anspruch 1, wobei das feste Trägermaterial eine oder mehr Hydroxylgruppen umfasst, durch welche die Nitrosoverbindung und/oder die Nitroso-Vorstufenverbindung an das Trägermaterial gebunden sind/ist.

3. Teilchenförmiges Material nach einem der vorhergehenden Ansprüche, wobei die volumengemittelte Teilchengröße des teilchenförmigen Trägermaterials 10 nm bis 500 µm, beispielsweise 50 nm bis 200 µm, wie etwa 50 nm bis 1000 nm, beträgt, einschließlich 200 nm bis 1000 nm und 50 nm bis 200 nm.

4. Teilchenförmiges Material nach einem der vorhergehenden Ansprüche, wobei die Nitrosoverbindung und/oder die Nitroso-Vorstufenverbindung an das feste Trägermaterial durch das Sauerstoffatom von einer oder mehreren Gruppen gebunden sind/ist, die eine Si-O-Einheit enthalten, wobei die Nitrosoverbindung und/oder die Nitroso-Vorstufenverbindung an das feste Trägermaterial vorzugsweise durch eines oder mehrere der Sauerstoffatome einer oder mehrerer Gruppen, die eine -Si(OR)₂O-Einheit enthalten, gebunden sind/ist, wobei jedes R unabhängig aus der Gruppe von C₁-C₂₄-Alkyl, C₃-C₂₄-Acyl, C₃-C₂₄-Cycloalkyl, C₅-C₁₂-Aryl, C₄-C₁₂-Heteroaryl ausgewählt ist; und gegebenenfalls mit mindestens einem von -OH, Amin, Nitro, Nitroso, -CN, einem Halogen, C₁-C₁₀-Alkyl, C₃-C₁₀-Acyl, C₁-C₁₀-Alkoxy oder C₅-C₁₀-Aryl substituiert ist.

5. Teilchenförmiges Material nach einem der vorhergehenden Ansprüche, wobei die Nitrosoverbindung und/oder die Nitroso-Vorstufenverbindung durch Umsetzen mindestens einer C₁-C₁₀-Alkoxysilangruppe, vorzugsweise einer C₁-C₃-Alkoxysilangruppe, der Nitrosoverbindung und/oder der Nitroso-Vorstufenverbindung mit einer oder mehreren Hydroxylgruppen des festen Trägermaterials an dem festen Trägermaterial gebunden wird.

6. Teilchenförmiges Material nach einem der vorhergehenden Ansprüche, wobei es sich bei der Nitrosoverbindung um ein Nitrososilan-Molekül handelt.

7. Teilchenförmiges Material nach einem der vorhergehenden Ansprüche, das durch Umsetzen des festen Trägermaterials mit einer Nitrosoverbindung und/oder Nitroso-Vorstufenverbindung der allgemeinen Formel (I) gebildet wird 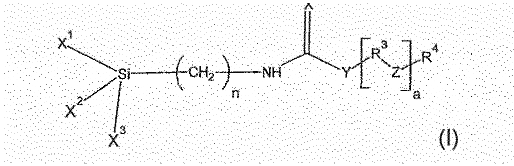
wobei n 1 bis 20 ist;
X, O oder S ist;
Y, O, S, NH oder N(R³) ist;
a 0 oder 1 ist;
jedes R³ unabhängig aus der Gruppe bestehend aus C₁-C₁₀-Alkyl, C₃-C₁₀-Cycloalkyl, C₅-C₁₂-Aryl, C₄-C₁₂-Heteroaryl ausgewählt ist;
Z aus der Gruppe bestehend aus -CH₂-, O, S, NH, NR³ ausgewählt ist; und
R⁴ aus der Gruppe bestehend aus Nitrosobenzol, Chinonoxim und Chinondioxim ausgewählt ist;
wobei jedes von R³ und R⁴ gegebenenfalls mit mindestens einem von -OH, Amin, Nitro, Nitroso, -CN, einem Halogen, C₁-C₁₀-Alkyl, C₁-C₁₀-Alkoxy, C₃-C₁₀-Acyl oder C₅-C₁₀-Aryl substituiert ist;
und
wobei X¹, X² und X³ gleich oder verschieden und aus der Gruppe bestehend aus Wasserstoff, Hydroxyl, -NH₂, -NHR³, C₁-C₂₄-Alkyl, C₃-C₂₄-Acyl, C₁-C₂₄-Alkoxy, C₃-C₂₄-Cycloalkyl, C₅-C₁₂-Aryl, C₅-C₁₀-Aryloxy ausgewählt sind;
wobei jede Gruppe gegebenenfalls mit mindestens einem von -OH, Amin, C₁-C₅-Alkyl, C₁-C₅-Alkoxy substituiert ist;
vorausgesetzt, dass
mindestens eines von X¹, X² und X³ eine kovalente Bindung der Nitrosoverbindung und/oder der Nitroso-Vorstufenverbindung der allgemeinen Formel (I) an das feste Trägermaterial ermöglicht.

8. Teilchenförmiges Material nach Anspruch 7 mit der allgemeinen Formel (II)

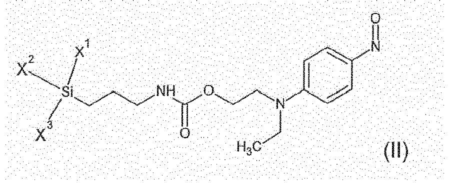

9. Teilchenförmiges Material nach Anspruch 7, wobei X³ für Hydroxyl oder C₁-C₂₄-Alkoxy steht oder wobei X² und X³ gleich oder verschieden und aus der Gruppe von Hydroxyl oder C₁-C₂₄-Alkoxy ausgewählt sind oder wobei X¹, X² und X³ gleich oder verschieden und aus der Gruppe von Hydroxyl oder C₁-C₂₄-Alkoxy ausgewählt sind.

10. Teilchenförmiges Material nach einem der vorhergehenden Ansprüche, wobei die Nitrosoverbindug die allgemeine Formel (V) aufweist: 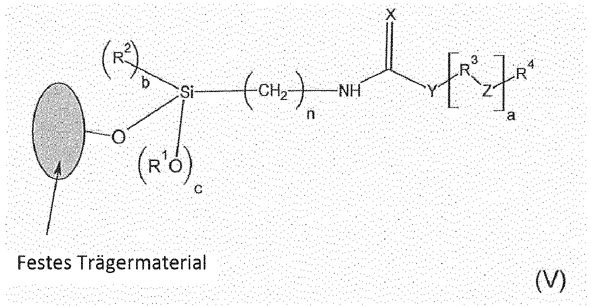
wobei n 1 bis 20 ist;
c 1 bis 2 ist, b 0 bis 1 ist, mit der Maßgabe, dass b + c = 2 ist;
jedes R¹ unabhängig aus der Gruppe bestehend aus H, C₁-C₂₄-Alkyl und C₃-C₂₄-Acyl, vorzugsweise aus C₁-C₄-Alkyl, ausgewählt ist und wobei, wenn c > 1 ist, mindestens ein R¹ nicht Wasserstoff ist; wobei jedes R² unabhängig aus der Gruppe bestehend aus C₁-C₂₄-Alkyl und C₃-C₂₄-Acyl, vorzugsweise aus C₁-C₄-Alkyl, ausgewählt ist;
X O oder S ist;
Y O, S, NH oder N(R³) ist;
a 0 oder 1 ist;
jedes R³ unabhängig aus der Gruppe bestehend aus C₁-C₁₀-Alkyl, C₃-C₁₀-Cycloalkyl, C₅-C₁₂-Aryl, C₄-C₁₂-Heteroaryl ausgewählt ist;
Z aus der Gruppe bestehend aus -CH₂-, O, S, NH, NR³ ausgewählt ist; und
R⁴ aus der Gruppe bestehend aus Nitrosobenzol, Chinonoxim und Chinondioxim ausgewählt ist;
wobei jedes von R³ und R⁴ gegebenenfalls mit mindestens einem von -OH, -NH₂, Nitro, Nitroso, -CN, einem Halogen, C₁-C₁₀-Alkyl, C₁-C₁₀-Alkoxy, C₃-C₁₀-Acyl oder C₅-C₁₀-Aryl substituiert ist.

11. Teilchenförmiges Material nach einem der vorhergehenden Ansprüche, wobei es sich bei der Nitroso-Vorstufenverbindung um ein aromatisches Oxim handelt, beispielsweise um mindestens eines aus einem Chinondioxim oder einem Chinonoxim oder Kombinationen davon.

12. Verfahren zur Herstellung des teilchenförmigen Materials nach einem der vorhergehenden Ansprüche, welches die folgenden Schritte umfasst:
(i) Bereitstellen eines festen Trägermaterials;
(ii) Bereitstellen einer Nitrosoverbindung und/oder Nitroso-Vorstufenverbindung;
(iii) kovalentes Binden des festen Trägermaterials von Schritt (i) und der Nitrosoverbindung und/oder Nitroso-Vorstufenverbindung von Schritt (ii) aneinander unter Bildung eines teilchenförmigen Materials, gegebenenfalls mit einem volumengemittelten Teilchendurchmesser von 50 nm bis 500 µm, wobei die Nitrosoverbindung und/oder Nitroso-Vorstufenverbindung und das Trägermaterial vorzugsweise durch eine Kondensationsreaktion kovalent aneinander gebunden werden.

13. Verfahren nach Anspruch 12, wobei das Trägermaterial in situ gebildet wird, wobei das Trägermaterial vorzugsweise Siliciumdioxid-Nanopartikel umfasst, die in situ gebildet werden, wobei die Siliciumdioxid-Nanopartikel insbesondere aus einem Tetraalkylorthosilicat wie etwa Tetraethylorthosilicat (TEOS) in situ gebildet werden.

14. Zusammensetzung, umfassend:
(a) ein teilchenförmiges Material nach einem der vorhergehenden Ansprüche; und
(b) eine oder mehrere reaktive Komponenten, die bei Exposition gegenüber geeigneten Bedingungen aushärten.

15. Zusammensetzung zum Binden eines elastomeren Materials, wie etwa eines Gummimaterials, an ein Substrat, wobei die Zusammensetzung umfasst:
(a) ein teilchenförmiges Material nach einem der vorhergehenden Ansprüche; und
(b) ein Polymer mit einer funktionellen Hydroxylgruppe.

16. Zusammensetzung zum Vernetzen eines elastomeren Materials, wie etwa eines Gummimaterials, um ein elastomeres Produkt zu bilden, wobei die Zusammensetzung umfasst:
(a) ein teilchenförmiges Material nach einem der Ansprüche 1 bis 11; und
(b) ein härtbares Material zum Aushärten, um ein Elastomer zu bilden.

## Revendications

1. Matériau particulaire comprenant :
(i) un matériau de support solide, et
(ii) un composé nitroso et/ou une oxime aromatique en tant que composé précurseur de nitroso
dans lequel ledit composé nitroso et/ou ledit composé précurseur de nitroso est lié de manière covalente au matériau de support solide, et dans lequel le matériau de support solide est un matériau à la base de silice et/ou le matériau de support particulaire est une silice particulaire.

2. Matériau particulaire selon la revendication 1, dans lequel le matériau de support solide comprend un ou plusieurs groupes hydroxyle à travers lesquels le composé nitroso et/ou le composé précurseur de nitroso est lié au matériau de support.

3. Matériau particulaire selon une quelconque revendication précédente, dans lequel la taille particulaire moyenne en volume du matériau de support particulaire est de 10 nm à 500 µm, par exemple, de 50 nm à 200 µm, par exemple encore de 50 nm à 1 000 nm, y compris de 200 nm à 1 000 nm, et de 50 nm à 200 nm.

4. Matériau particulaire selon une quelconque revendication précédente, dans lequel le composé nitroso et/ou le composé précurseur de nitroso est lié au matériau de support solide par l'intermédiaire de l'atome d'oxygène d'un ou de plusieurs groupes contenant un fragment de Si-O, de préférence le composé nitroso et/ou le composé précurseur de nitroso est lié au matériau de support solide par l'intermédiaire d'un ou de plusieurs des atomes d'oxygène d'un ou de plusieurs groupes contenant un fragment de -Si(OR)₂O-, chaque R étant indépendamment choisi dans le groupe des alkyles C₁-C₂₄, des acyles C₃-C₂₄, des cycloalkyles C₃-C₂₄, des aryles C₅-C₁₂, des hétéroaryles C₄-C₁₂ ; et est éventuellement substitué par au moins l'un parmi l'-OH, l'amine, le nitro, le nitroso, le -CN, l'halogène, l'alkyle C₁-C₁₀, l'acyle C₃-C₁₀, l'alcoxy C₁-C₁₀ ou l'aryle C₅-C₁₀.

5. Matériau particulaire selon une quelconque revendication précédente, dans lequel le composé nitroso et/ou le composé précurseur de nitroso est fixé au matériau de support solide en faisant réagir au moins un groupe alcoxysilane C₁-C₁₀, de préférence un groupe alcoxysilane C₁-C₃ du composé nitroso et/ou du composé précurseur de nitroso avec un ou plusieurs groupes hydroxyle du matériau de support solide.

6. Matériau particulaire selon une quelconque revendication précédente, dans lequel le composé nitroso est une molécule de nitrososilane.

7. Matériau particulaire selon une quelconque revendication précédente, qui est formé en faisant réagir le matériau de support solide avec un composé nitroso et/ou un composé précurseur de nitroso de formule générale (I) 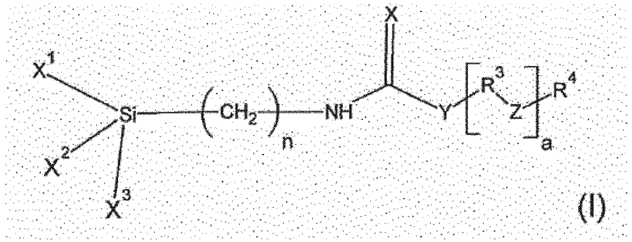
dans lequel n va de 1 à 20 ;
X est O ou S ;
Y est O, S, NH ou N(R³) ;
a vaut 0 ou 1 ;
chaque R³ est indépendamment choisi dans le groupe constitué de l'alkyle C₁-C₁₀, du cycloalkyle C₃-C₁₀, de l'aryle C₅-C₁₂, de l'hétéroaryle C₄-C₁₂ ;
Z est sélectionné dans le groupe constitué de : -CH₂-, O, S, NH, NR³ ; et
R⁴ est choisi dans le groupe constitué : du nitrosobenzène, de l'oxime de quinone et de la dioxime de quinone ;
dans lequel chacun de R³ et R⁴ est éventuellement substitué par au moins l'un parmi l'-OH, l'amine, le nitro, le nitroso, le -CN, l'halogène, l'alkyle C₁-C₁₀, l'alcoxy C₁-C₁₀, l'acyle C₃-C₁₀ ou l'aryle C₅-C₁₀ ; et
dans lequel,
X¹, X² et X³ sont identiques ou différents et sont choisis dans le groupe constitué de : l'hydrogène, l'hydroxyle, le -NH₂, le -NHR³, l'alkyle C₁-C₂₄, l'acyle C₃-C₂₄, l'alcoxy C₁-C₂₄, le cycloalkyle C₃-C₂₄, l'aryle C₅-C₁₂, l'aryloxy C₅-C₁₀ ;
chaque groupe étant facultativement substitué par au moins l'un parmi l'-OH, l'amine, l'alkyle C₁-C₅, l'alcoxy C₁-C₅ ;
à condition que
au moins l'un parmi X¹, X² et X³ permet une attache covalente du composé nitroso et/ou du composé précureur de nitroso de formule générale (I) au matériau de support solide.

8. Matériau particulaire selon la revendication 7 avec la formule générale (II)

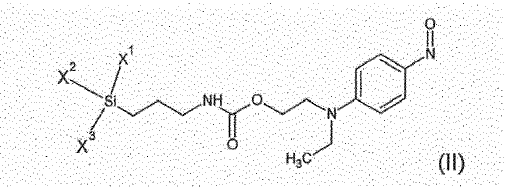

9. Matériau particulaire selon la revendication 7, dans lequel X³ est un hydroxyle ou un alcoxy C₁-C₂₄, ou dans lequel X² et X³ sont identiques ou différents et sont choisis dans le groupe hydroxyle ou alcoxy C₁-C₂₄, ou dans lequel X¹, X² et X³ sont identiques ou différents et sont choisis dans le groupe de l'hydroxyle ou de l'alcoxy C₁-C₂₄.

10. Matériau particulaire selon une quelconque revendication précédente, dans lequel le composé nitroso a la formule générale (V) : 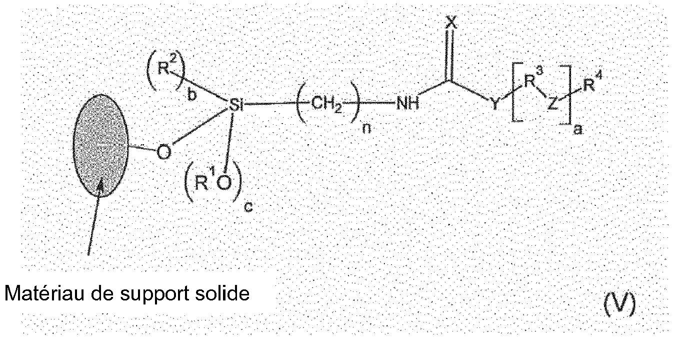
dans lequel n va de 1 à 20 ;
c va de 1 à 2, b va de 0 à 1, à condition que b+c = 2 ;
chaque R¹ est indépendamment choisi dans le groupe constitué de H, de l'alkyle C₁-C₂₄ et de l'acyle C₃-C₂₄, de préférence parmi l'alkyle C₁-C₄ et dans lequel, lorsque c > 1, au moins un R¹ n'est pas un hydrogène ; chaque R² est indépendamment choisi dans le groupe constitué de l'alkyle C₁-C₂₄ et de l'acyle C₃-C₂₄, de préférence parmi l'alkyle C₁-C₄ ;
X est O ou S ;
Y est O, S, NH ou N(R³) ;
a vaut 0 ou 1 ;
chaque R³ est indépendamment choisi dans le groupe constitué de l'alkyle C₁-C₁₀, du cycloalkyle C₃-C₁₀, de l'aryle C₅-C₁₂, de l'hétéroaryle C₄-C₁₂ ;
Z est choisi dans le groupe constitué de : -CH₂-, O, S, NH, NR³ ; et
R⁴ est choisi dans le groupe constitué : du nitrosobenzène, de l'oxime de quinone et de la dioxime de quinone ;
dans lequel chacun de R³ et R⁴ est éventuellement substitué par au moins l'un parmi l'-OH, l'amine, le nitro, le nitroso, le -CN, l'halogène, l'alkyle C₁-C₁₀, l'alcoxy C₁-C₁₀, l'acyle C₃-C₁₀ ou l'aryle C₅-C₁₀.

11. Matériau particulaire selon une quelconque revendication précédente, dans lequel le composé précurseur de nitroso est une oxime aromatique, par exemple au moins l'une parmi une dioxime de quinone ou une oxime de quinone ou des combinaisons de celles-ci.

12. Procédé pour la préparation du matériau particulaire selon une quelconque revendication précédente, comprenant les étapes consistant à :
(i) fournir un matériau de support solide ;
(ii) fournir un composé nitroso et/ou un composé précurseur de nitroso ;
(iii) attacher de manière covalente le matériau support solide de l'étape (i) et le composé nitroso et/ou le composé précurseur de nitroso de l'étape (ii) l'un à l'autre pour former un matériau de support particulaire ayant éventuellement un diamètre particulaire moyen en volume de 50 nm à 500 µm, de préférence le composé nitroso et/ou le composé précurseur de nitroso et le matériau de support sont attachés de manière covalente par une réaction de condensation.

13. Procédé selon la revendication 12, dans lequel le matériau de support est formé in situ, de préférence le matériau de support comprend des nanoparticules de silice qui sont formées in situ, plus préférablement les nanoparticules de silice sont formées in situ à partir d'un tétraalkylorthosilicate, tel que le tétraéthylorthosilicate (TEOS).

14. Composition comprenant :
(a) un matériau particulaire selon une quelconque revendication précédente ;
(b) un ou plusieurs composants réactifs qui durcissent lors de l'exposition à des conditions appropriées.

15. Composition pour lier un matériau élastomérique tel qu'un matériau de caoutchouc à un substrat, la composition comprenant :
(a) un matériau particulaire selon une quelconque revendication précédente ; et
(b) un polymère ayant un groupe fonctionnel hydroxyle.

16. Composition pour réticuler un matériau élastomérique tel qu'un matériau de caoutchouc pour former un produit élastomère, la composition comprenant :
(a) un matériau particulaire selon l'une quelconque des revendications 1 à 11 ; et
(b) un matériau durcissable pour durcir pour former un élastomère.
